# EUROPEAN PATENT SPECIFICATION

(11) **EP 4 519 131 B1**
(45) Date of publication and mention of the grant of the patent: **01.04.2026**
(21) Application number: 23726630.9
(22) Date of filing: 05.05.2023
(51) Int. Cl.: B60T 8/32, B60T 17/18, B60T 8/17, B62L 3/00

(54) **PRESSURE CONTROL DEVICE, BRAKING SYSTEM, CONTROL METHOD**
DRUCKSTEUERUNGSVORRICHTUNG, BREMSSYSTEM, STEUERUNGSVERFAHREN
DISPOSITIF DE RÉGULATION DE PRESSION, SYSTÈME DE FREINAGE, PROCÉDÉ DE COMMANDE

(30) Priority: 05.05.2022 IT 202200009176; 05.05.2022 IT 202200009182
(43) Date of publication of application: 12.03.2025
(73) Proprietor: Brembo S.p.A., 24035 Curno (Bergamo) (IT)
(72) Inventor: ARIENTI, Roberto, 24035 Curno, Bergamo (IT); ODONI, Andrea, 24035 Curno, Bergamo (IT); PESENTI, Luca, 24035 Curno, Bergamo (IT)
(74) Representative: Crippa, Paolo Ernesto
(86) International application number: PCT/IB2023/054709
(87) International publication number: WO 2023/214376

(56) References cited:
- DE-A1- 102005 043 267
- DE-A1- 102019 211 537
- DE-A1- 3 048 847

## Description

### . Field of the invention

. The present invention relates to a pressure control device for a braking system, a braking system, and a method of controlling the actuating pressure of a braking system.

. The patent application claims priority of Italian patent applications 102022000009182 and 102022000009176.

### . Background art

**.** Braking systems are known, in which two braking devices are associated with one wheel, such as two brake calipers associated with two respective brake discs connected to two opposite sides of a wheel, for example. Such solutions are used on motorcycles, for example, to brake a front wheel. Document DE102019211537A1 discloses a hydraulic braking system, including two brake circuits which each include a hydraulically actuatable wheel brake and an electrically operable pressure generator activated as a function of a brake request of a driver of the motor vehicle. An electric actuator is assigned to each pressure generator for its operation, and a activatable emergency operation valve is interconnected between the brake circuits.

**.** In such systems, the two braking devices are hydraulically connected to the same pressure chamber of an actuating device, where the brake fluid pressurized in the pressure chamber actuates both braking devices, i.e., each hydraulic actuator of the braking device, with the same pressure. In other words, there is only one braking circuit in such systems which actuates at least two braking devices in parallel. Therefore, with these solutions, the actuating conditions of the two braking devices are the same because both braking devices are in direct fluid connection with the same pressure chamber. As a result, these solutions allow obtaining substantially uniform braking actions, as well as wear conditions, of the two braking devices.

**.** Although with these solutions it is possible to actuate the two braking devices with the same pressure, thus ensuring uniformity of the braking action on the two sides of the wheel and of the wear conditions of the two braking devices, any hydraulic leakage results in a loss of pressure for the entire system, potentially precluding the operation thereof and thus preventing a user from braking the wheel on which the system acts, with severe reduction of driving safety in case of failure.

**.** Therefore, the need is strongly felt in the industry to manufacture braking systems which involve the actuation of two braking devices per single wheel, in which an increased safety of use is ensured.

**.** Furthermore, the need is strongly felt in the industry to manufacture braking systems in which the impairment of the use of one of the two braking devices does not affect the operation of the other braking device, and at the same time in which during normal conditions of use of the two braking devices, the conflicting need to keep the actuating conditions of the two braking devices as uniform as possible is met.

### . Solution

**.** It is an object of the present invention to provide a pressure control device for a braking system which allows actuating at least two braking devices with the same actuating pressure during the normal operation of the at least two braking devices, and which allows actuating one braking device with an actuating pressure irrespective of a failure of another braking device, thus reducing, on the one hand, the variations in wear of the braking devices by preventing variations in pressure conditions in the actuation of the braking devices, and on the other hand, increasing the safety of the braking system in case of an inability to actuate a braking device.

**.** This and other objects and advantages are achieved by a pressure control device according to claim **1,** as well as by a braking system according to claim **12,** as well as by a pressure control method according to claim **14.**

**.** Some advantageous embodiments are the subject of the dependent claims.

**.** By virtue of the suggested solutions, it is possible to ensure automatic control of the actuating pressures of a first braking actuation device and a second braking actuation device.

**.** By virtue of the suggested solutions, it is possible to balance and align the pressures of a first circuit connected to a first braking actuation device and a second circuit connected to a second braking actuation device, allowing a fluid connection between the two circuits when both circuits are at a pressure above a threshold pressure.

**.** By virtue of the suggested solutions, it is possible to provide a mechanical-type pressure control device with small size and low cost.

**.** By virtue of the suggested solutions, it is possible to respond to the need to ensure an operation of a first braking actuation device irrespective of the operation of a second braking actuation device, while responding to the additional conflicting need to ensure uniformity in the actuating conditions of the first braking actuation device and the second braking actuation device, by keeping the first braking actuation device and the second braking actuation device fluidly separated from each other as long as at least one of the first circuit pressure and the second circuit pressure is below a threshold pressure, and only when both the first circuit pressure and the second circuit pressure exceed the threshold pressure, the first braking actuation device and the second braking actuation device enter into fluid communication.

### . Drawings

**.** Further features and advantages of the pressure control device, the braking system, and the control method will become apparent from the following description of preferred embodiments thereof, given by way of non-limiting indication, with reference to the accompanying drawings, in which:

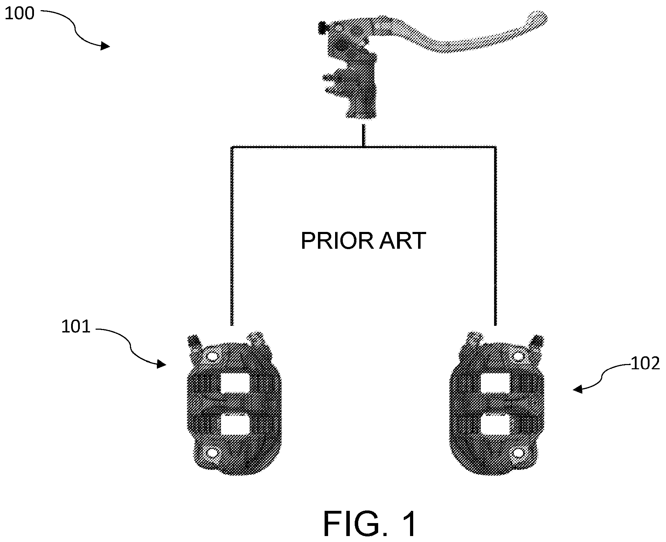

- figure 1 diagrammatically shows a braking system of known type, in which the same actuating device simultaneously controls a first braking device and a second braking device by means of a two-branch split line, e.g., a first brake caliper and a second brake caliper, forming a single braking circuit, in which the operation of the entire circuit is impaired if a failure occurs in one of the two branches and/or in one of the two braking devices;

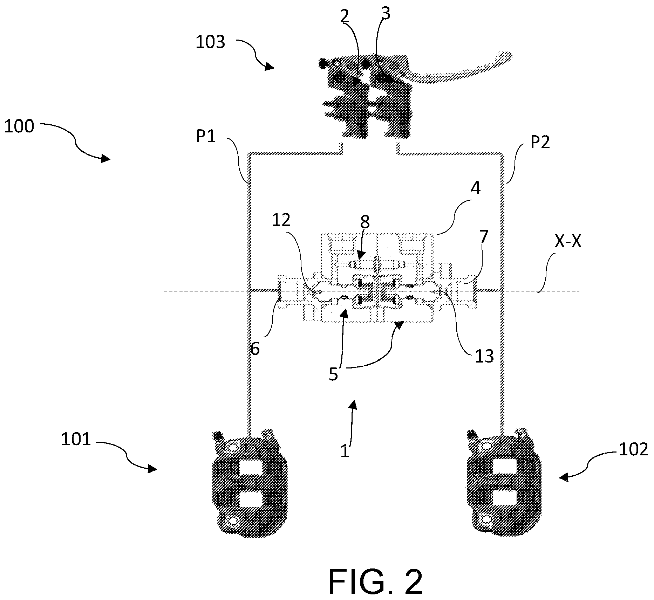

- figure 2 diagrammatically shows a braking system according to the present invention, in which the same actuating device controls, in parallel and independently by means of two separate pressure chambers, a first braking device and a second braking device, e.g., a first brake caliper and a second brake caliper associated with the same wheel of a vehicle, forming a first circuit and a second circuit, where a pressure control device according to the present invention is connected in parallel to the first circuit and the second circuit by keeping the two circuits fluidly separated when at least one of the first circuit pressure and the second circuit pressure is lower than a threshold pressure, thus allowing either the first braking device or the second braking device to be actuated irrespective of a failure in the second circuit or the first circuit, and putting the two circuits in fluid communication only when both the first circuit pressure and the second circuit pressure are higher than the threshold pressure, thus allowing the first braking device and the second braking device to be actuated with the same pressure;

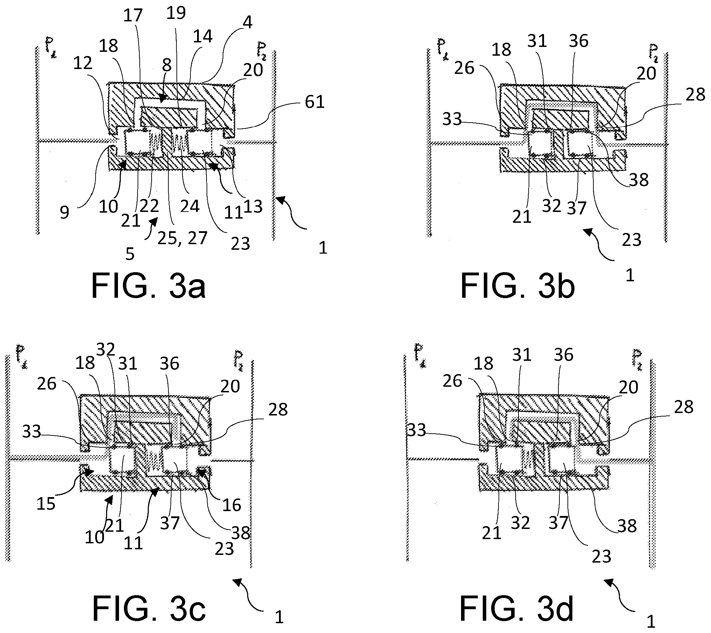

- figures 3a-3d diagrammatically show the operation of the pressure control device according to an embodiment of the present invention, in which figure 3a shows the pressure actuating device when the braking system is at rest and the first circuit liquid and the second circuit liquid are not under pressure, where the pressure control mechanism is in a fully closed configuration; in which figure 3b shows the pressure actuating device which puts the first circuit and the second circuit fluid into fluid communication when both the first circuit pressure and the second circuit pressure are higher than the threshold pressure, where the pressure control mechanism is in a fully open configuration; figure 3c shows the pressure control device when a failure is present in the second circuit, where the first circuit pressure is above the threshold pressure, while the second circuit pressure is lower than the threshold pressure, where the pressure control mechanism is in a first closing configuration; figure 3d shows the pressure control device when a failure is present in the first circuit, where the second circuit pressure is above the threshold pressure, while the first circuit pressure is lower than the threshold pressure, where the pressure control mechanism is in a second closing configuration;

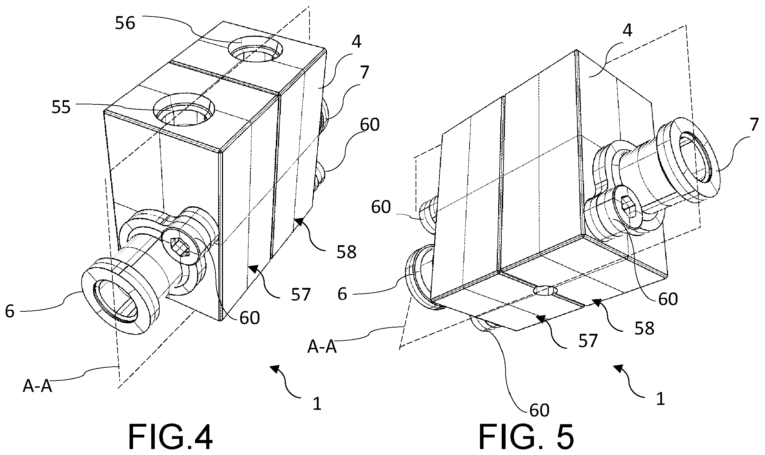

- figure 4 shows an axonometric view of the pressure control device according to an embodiment of the present invention, in which a first side and an upper part of the body of the pressure control device can be seen;
- figure 5 shows an axonometric view of the pressure control device in figure 4, in which a second side opposite to the first side and a lower part of the body of the pressure control device can be seen;

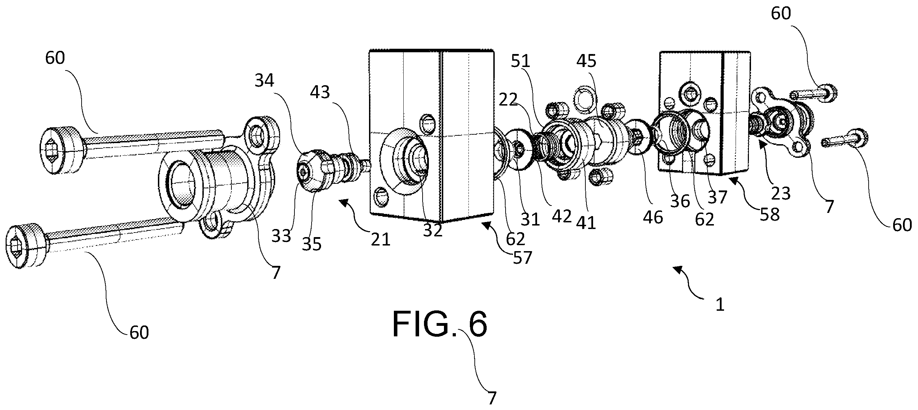

- figure 6 shows an axonometric exploded view of the pressure control device in figures 4 and 5, in which the body of the device is shown, which houses the pressure control mechanism and is configured to be connected to a first circuit and a second circuit by means of respective connecting portions;

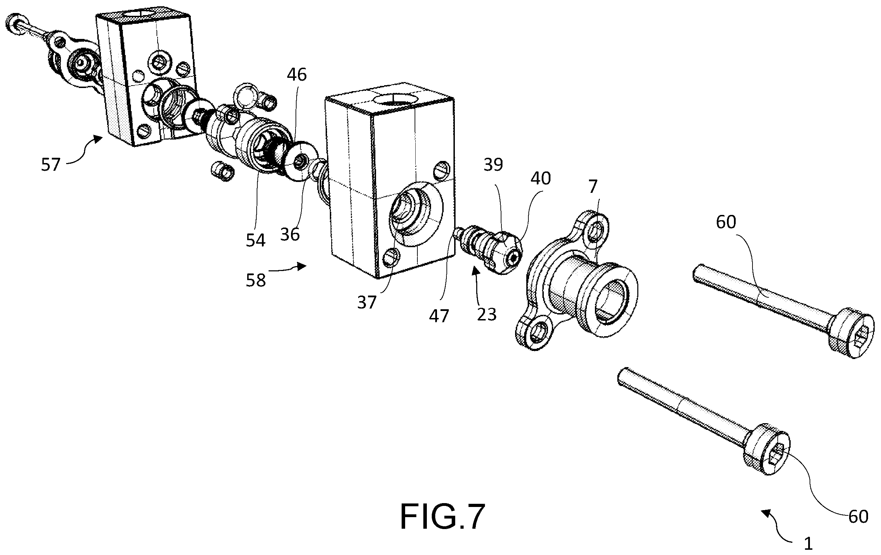

- figure 7 shows an axonometric view of the control device in figure 6, from a point of view opposite to that of figure 5;

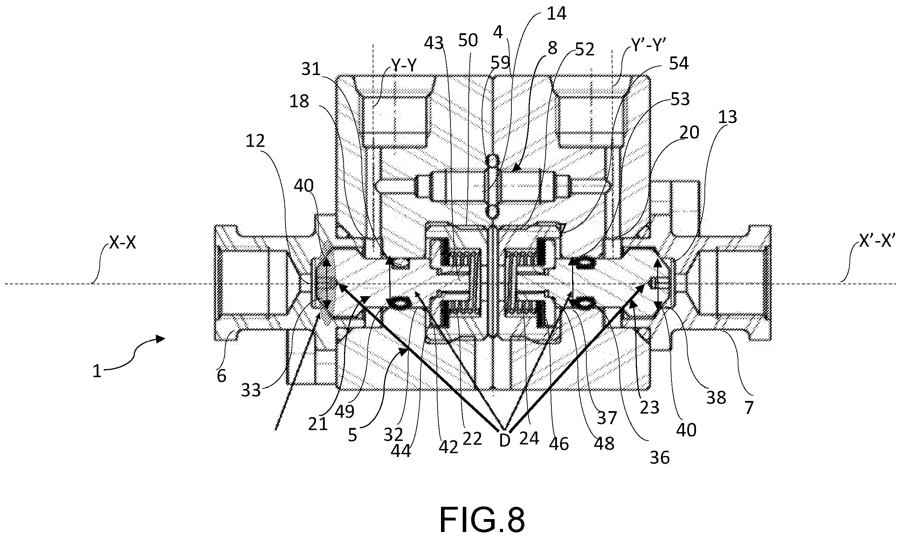

- figure 8 shows a section view of the control device in figure 4 taken along plane A-A, in which the pressure control mechanism housed inside the device body can also be seen, where the first piston and the second piston form a seal with the respective seat in which they are housed, by means of a respective polymer gasket fitted onto the body of the respective piston to form a dynamic and static seal with a wall of the respective seat, and by means of a respective piston surface adapted to form a static seal of geometric type against a respective seat surface;

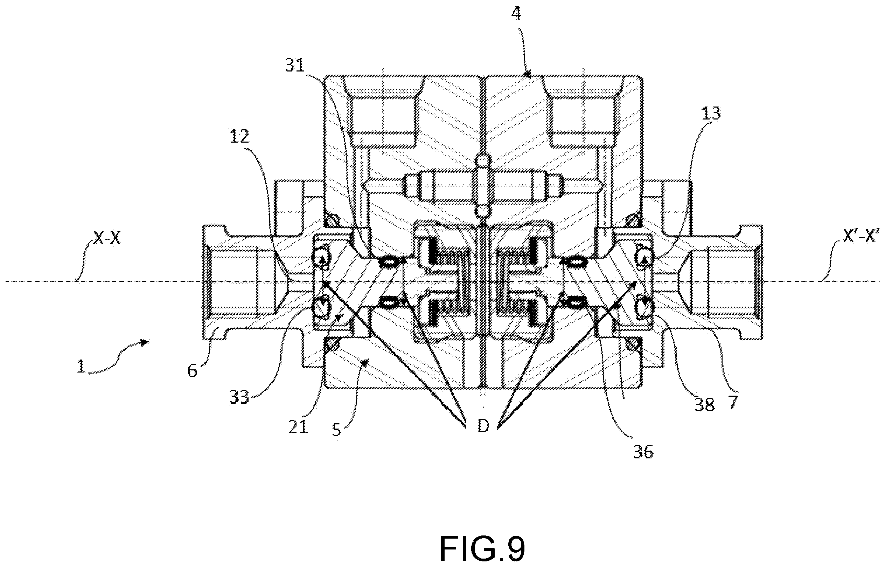

- figure 9 shows a section view of the device in figure 4 taken along plane A-A, in which the pressure control mechanism housed inside the device body can also be seen, where the first piston and the second piston form a seal with the respective seat in which they are housed, by means of a respective polymer gasket fitted onto the body of the respective first piston to form a dynamic and static seal with a wall of the respective seat, and a second polymer gasket inserted into an axial seat made on the head of the respective piston to form a static seal against a respective surface of the seat.

### . Description of some preferred embodiments

**.** According to a general embodiment, a pressure control device for a braking system 100 is indicated by reference numeral 1.

**.** Said pressure control device 1 comprises a device body 4 partially delimiting at least a first circuit side opening 9, at least a second circuit side opening 61, and at least one conduit 8 putting said at least a first circuit side opening 9 and said at least a second circuit side opening 61 in fluid communication. Said at least one conduit 8 comprises at least a first conduit portion 12 and at least a second conduit portion 13. According to an embodiment, said at least a first circuit side opening 9 and said at least a second circuit side opening 61 are arranged on opposite sides of said device body 4.

**.** The first conduit portion 12 is fluidly connectable to a first circuit 2 to receive a first circuit fluid.

**.** The second conduit portion 13 is fluidly connectable to a second circuit 3 to receive a second circuit fluid.

**.** Said first circuit 2 comprises a first pressure chamber of a brake actuating device 103 to pressurize the first circuit fluid at a first circuit pressure P1, where the first pressure chamber is fluidly connected to a first braking actuation device 101 to brake a wheel of a vehicle.

**.** Said second circuit 3 comprises a second pressure chamber of said brake actuating device 103 to pressurize the second circuit fluid at a second circuit pressure P2, where the second pressure chamber is fluidly connected to a second braking actuation device 102 to brake said wheel of a vehicle.

**.** Said pressure control device 1 comprises a pressure control mechanism 5 configured to control the first circuit pressure P1 and/or the second circuit pressure P2 to reach an actuating pressure Pa.

**.** Said pressure control mechanism 5 is housed at least partially in said conduit 8.

**.** Advantageously, when at least one of said first circuit pressure P1 and said second circuit pressure P2 is lower than a threshold pressure Ps, said pressure control mechanism 5 is configured to prevent fluid passages between said first conduit portion 12 and said second conduit portion 13, or vice versa, so as to sustain at least one of said first circuit pressure P1 and said second circuit pressure P2, which is higher than said threshold pressure Ps, up to said actuating pressure Pa to actuate either the first braking device 101 or the second braking device 102.

**.** Advantageously, when the first circuit pressure P1 and said second circuit pressure P2 are both higher than a threshold pressure Ps, said pressure control mechanism 5 is configured to fluidly connect the first conduit portion 12 and the second conduit portion 13, so as to align said first circuit pressure P1 and said second circuit pressure P2 with said actuating pressure Pa to actuate the first braking device 101 and the second braking device 102 with said actuating pressure Pa.

**.** By virtue of such a pressure control device 1, it is possible to automatically, mechanically, fluidly connect and isolate a first circuit and a second circuit in a reversible manner, so that, during a normal condition of use in which a sufficient circuit pressure to actuate the respective braking device can be reached in each of the two circuits, the first circuit and the second circuit are in fluid connection so as to work at the same pressure as if they were one circuit, and in case of a failure of either circuit, i.e., if the circuit pressure is insufficient to operate one of the two circuits and one of the two braking devices, the first circuit and the second circuit are separated thus preventing fluid passages between the two circuits, thus keeping the two circuits isolated, causing one of the two circuits to be pressurized irrespective of a failure on the other circuit.

**.** By virtue of said pressure control mechanism 5, it is possible, in the absence of failures of the first circuit 2 or the second circuit 3, to avoid registering pressure differences between the first circuit pressure P1 and the second circuit pressure P2 which could occur if the first circuit 2 and the second circuit 2 were mutually separated, allowing the pressure conditions inside the first circuit 2 and the second circuit 3 to be aligned by putting the two circuits in fluid communication, actuating said first braking actuation device 101 and said second braking actuation device 102 with the same actuating pressure Pa. It is thus possible to align the wear conditions, as well as the brake actuating conditions, of the first braking actuation device 101 and the second braking actuation device 102 acting for example on two opposite sides of the same wheel of a vehicle.

**.** By virtue of said pressure control mechanism 5, it is possible to keep the two circuits fluidly separated, avoiding impairment of the braking system in case of a failure of one of the first circuit 2 and the second circuit 3, such as a fluid leakage, which would occur in the braking systems of prior art in which the two circuits 2, 3 are in fluid communication.

**.** By virtue of the suggested solutions, the pressure control mechanism 5 is configured to allow the fluid in the working circuit 2, 3 to reach the actuating pressure Pa, irrespective of a failure of one of the two circuits 2, 3.

**.** According to an embodiment, said pressure control mechanism 5 is configured to detect said first pressure P1 and said second pressure P2, preferably in a mechanical manner by means of at least one elastic device.

**.** According to an embodiment, said conduit 8 comprises a third conduit portion 14 adapted to fluidly connect said at least a first conduit portion 12 and said at least a second conduit portion 13.

**.** According to an embodiment, said pressure control mechanism 5 is configured to put said first conduit portion 12 in fluid communication with said third conduit portion 14 preventing fluid passages from said third conduit portion 14 to said second conduit portion 13, when said first conduit pressure P1 is higher than said threshold pressure Ps and said second conduit pressure P2 is lower than said threshold pressure Ps, so as to sustain said first circuit pressure P1 to actuate the first braking device 101 with said actuating pressure Pa.

**.** According to an embodiment, said pressure control mechanism 5 is configured to put said second conduit portion 13 in fluid communication with said third conduit portion 14 preventing fluid passages from said third conduit portion 14 to said first conduit portion 12, when said second conduit pressure P2 is higher than said threshold pressure Ps and said first conduit pressure P1 is lower than said threshold pressure Ps, so as to sustain said second circuit pressure P2 to actuate the second braking device 102 with said actuating pressure Pa.

**.** According to an embodiment, said pressure adjusting mechanism 5 comprises a first valve 10 housed at least partially in said first conduit portion 12.

**.** According to an embodiment, said pressure adjusting mechanism 5 comprises a second valve 11 housed at least partially in said second conduit portion 13.

**.** According to an embodiment, said third conduit portion 14 extends between a first valve side opening 18 in fluid communication with said first conduit portion 12 and a second valve side opening 20 in fluid communication with said second conduit portion.

**.** According to an embodiment, said first valve 10 is configured to open and fluid-tightly close said first valve side opening 18 in a reversible manner.

**.** According to an embodiment, when the first circuit pressure P1 is lower than said threshold pressure Ps, said first valve 10 closes said first valve side opening 18 preventing fluid passages from said first conduit portion 12 to said third conduit portion 14, and vice versa.

**.** According to an embodiment, when the first circuit pressure P1 is higher than or equal to said threshold pressure Ps, said first valve 10 opens said first valve side opening 18 by fluidly connecting said first conduit portion 12 to said third conduit portion 14, and vice versa.

**.** According to an embodiment, said second valve 11 is configured to open and fluid-tightly close said second valve side opening 20 in a reversible manner.

**.** According to an embodiment, when the second circuit pressure P2 is lower than said threshold pressure Ps, said second valve 11 closes said second valve side opening 20 preventing fluid passages from said second conduit portion 12 to said third conduit portion 14, and vice versa.

**.** According to an embodiment, when the second circuit pressure P2 is greater than or equal to said threshold pressure Ps, said second valve 11 opens said second valve side opening 20 by fluidly connecting said second conduit portion 12 to said third conduit portion 14, and vice versa.

**.** According to an embodiment, said threshold pressure Ps is between 1 bar and 10 bars, preferably between 1 bar and 4 bars, even more preferably between 1 bar and 3 bars.

**.** According to an embodiment, said pressure control device 1 comprises a first connecting portion 6 to fluidly connect the first conduit portion 12 to the first circuit 2.

**.** According to an embodiment, said pressure control device 1 comprises a first connecting portion 6 to fluidly connect the first conduit portion 12 to the first circuit 2.

**.** According to an embodiment, said pressure control device 1 comprises a second connecting portion 7 to connect the second conduit portion 13 to the second circuit 3.

**.** According to a first embodiment, said first valve 10 comprises a first piston or first shutter element 21, housed in a first valve seat 15 delimited by said device body 4 and comprising at least partially said first conduit portion 12.

**.** According to an embodiment, said first piston 21 is movable with respect to said device body 4, in said first valve seat 15, reversibly between a first conduit closing configuration and at least a first conduit opening configuration. According to an embodiment, said first piston 21 is constantly and/or elastically biased to said first conduit closing configuration so as to allow an opening of the first valve only when the first circuit pressure P1 reaches and/or exceeds the threshold pressure Ps.

**.** According to an embodiment, in the first conduit closing configuration, when the first circuit pressure P1 is lower than the threshold pressure Ps, said first piston 21 forms a seal with a first wall 26 of said first valve seat 15 preventing a fluid passage from said first connecting portion 6 to said third conduit portion 14.

**.** According to an embodiment, in the at least a first conduit opening configuration, when the first circuit pressure P1 is at least equal to or higher than said threshold pressure Ps, said first piston 21 is spaced apart from said first wall 26 and/or avoids forming a seal with said first wall 26, allowing a fluid connection between said first connecting portion 6 and said third conduit portion 14. According to an embodiment, in the at least a first conduit opening configuration, said first piston 21 delimits a first fluid passage with said device body 4, which skims at least one head portion of the first piston 21 allowing a fluid passage from said first connecting portion 6 to said third conduit portion 14 or vice versa. According to an embodiment, said first piston 21 is movable by a maximum stroke between 0.2 mm and 0.8 mm, preferably between 0.2 mm and 0.4 mm.

**.** According to a second embodiment, said second valve 11 comprises a second piston or second shutter element 23 housed in a second piston seat 16 delimited by said device body 4 and comprising at least partially said second conduit portion 13.

**.** According to an embodiment, said second piston 23 is movable with respect to said device body 4, in said second valve seat 16, reversibly between a second conduit closing configuration and at least a second conduit opening configuration. According to an embodiment, said second piston 23 is constantly and/or elastically biased to said second conduit closing configuration so as to allow an opening of the second valve only when the second circuit pressure P2 reaches and/or exceeds the threshold pressure Ps. According to an embodiment, said second piston 23 is movable by a maximum stroke between 0.2 mm and 0.8 mm, preferably between 0.2 mm and 0.4 mm.

**.** According to an embodiment, in the second conduit closing configuration, when said second circuit pressure P2 is lower than said threshold pressure Ps, said second piston 23 forms a seal with a second wall 28 of said second valve seat 16 preventing a fluid passage from said second connecting portion 7 to said third conduit portion 14, or vice versa.

**.** According to an embodiment, in the at least a second conduit closing configuration, when the second circuit pressure P2 is at least equal to or higher than said threshold pressure Ps, said second piston 23 is spaced apart from said second wall 28 and/or avoids forming a seal with said second wall 28 allowing a fluid connection from said first connecting portion 7 to said third conduit portion 14. According to an embodiment, in the at least a second conduit opening configuration, said second piston 23 delimits a second fluid passage with said device body 4, which at least partially skims a head portion of the second piston 23 allowing a fluid connection from said first connecting portion 7 to said third conduit portion 14 or vice versa.

**.** According to an embodiment, said first valve 10 and said second valve 11 are one-way valves. According to an embodiment, said first valve 10 and said second valve 11 are driven only from one direction and are configured to form a seal in both directions. According to an embodiment, said first valve 10 and said second valve 11 switch from the respective closing configuration to the respective opening configuration only if the first circuit pressure P1 and the second circuit pressure P2 exceed the threshold pressure Ps, respectively. According to an embodiment, the first circuit pressure P1 does not affect the actuation of the second piston 23, and the second circuit pressure P2 does not affect the actuation of the first piston 21, because the second piston 23 has no effective area on which the pressure of the first fluid can act to move the second piston, and the first piston 21 has no effective area on which the pressure of the second fluid can act to move the first piston 21.

**.** According to an embodiment, said first valve seat 15 extends along a longitudinal direction X-X of first valve. According to an embodiment, said second valve seat 16 extends along a longitudinal direction X'-X' of second valve. According to an embodiment, said third conduit portion 14 engages in said first valve seat 15 according to a first engagement direction Y-Y, which is incident and/or transverse to said longitudinal direction X-X of first valve. According to an embodiment, said third conduit portion 14 engages in said second valve seat 16 according to a second engagement direction Y'-Y', which is incident and/or transverse to said longitudinal direction X'-X' of second valve. According to an embodiment, said longitudinal direction X-X of first valve and said longitudinal direction X'-X' of second valve are parallel and/or coincident. According to an embodiment, said longitudinal direction X-X of first valve and said longitudinal direction X'-X' of second valve are rectilinear. According to an embodiment, said longitudinal direction X-X of first valve and said longitudinal direction X'-X' of second valve define the seat axis about which the walls of the device body delimiting the respective valve seats extend. According to an embodiment, said third conduit portion 14 runs along a direction which is parallel to said longitudinal direction X-X of first valve and said longitudinal direction X'-X' of second valve.

**.** According to an embodiment, said first valve 10 comprises a first elastic element 22 housed in said first valve seat 15.

**.** According to an embodiment, said first elastic element 22 is interposed between said first piston 21 and said device body 4 along said longitudinal direction X-X of first valve, preferably a first bottom wall 25 of said first valve seat 15, so as to constantly bias said first piston 21 to said first conduit closing configuration.

**.** According to an embodiment, said first elastic element 22 is sized so that when the first circuit pressure P1 is lower than the threshold pressure Ps, said first piston is in said first conduit closing configuration.

**.** According to an embodiment, said second valve 11 comprises a second elastic element 24 housed in said second valve seat 16.

**.** According to an embodiment, said second elastic element 24 is interposed between said second piston 23 and said device body 4 along said longitudinal direction X'-X' of second valve, preferably a second bottom wall 26 of said second valve seat 16, so as to constantly bias the piston 23 to said second conduit closing configuration.

**.** According to an embodiment, said second elastic element 24 is sized so that when the second circuit pressure P2 is lower than the threshold pressure Ps, said first piston is in said second conduit closing configuration.

**.** According to an embodiment, said first piston 21 comprises a first gasket 31 of first piston, where said first gasket 31 of first piston is configured to form a seal with a first sliding wall 32 of said first valve seat 15 in any position of said first piston 21 between said at least a first conduit opening configuration and said first conduit closing configuration. According to an embodiment, said first gasket 31 of first piston is configured to fluidly isolate said first elastic element 22 from said third conduit portion 14 and/or said first circuit 2.

**.** According to an embodiment, said second piston 23 comprises a first gasket 36 of second piston, where said first gasket 36 of second piston is configured to form a seal with a sliding wall 37 of said second valve seat 16 in any position of said second piston 23 between said at least a second conduit opening configuration and said second conduit closing configuration. According to an embodiment, said first gasket 36 of second piston is configured to fluidly isolate said second elastic element 24 from said third conduit portion 14 and/or said second circuit 3.

**.** According to an embodiment, said first gasket 31 of first piston is a low-friction annular gasket fitted onto a first groove made on the piston body of said first piston 21. According to an embodiment, said first gasket 31 of first piston and/or said first gasket 36 of second piston is made of a polymer material compatible with a brake fluid.

**.** According to an embodiment, said first gasket 31 of first piston and/or said first gasket 36 of second piston is a gasket with a V-profile, for example, or an O-ring.

**.** According to an embodiment, said first gasket 36 of second piston is a second low-friction annular gasket fitted onto a second groove made on the piston body of said second piston 23.

**.** According to an embodiment, said first piston 21 comprises a second gasket 33 of first piston configured to form a seal with said first wall 26 when said first piston 21 is in said first conduit closing configuration.

**.** According to an embodiment, said second gasket 33 of first piston is spaced apart from said first wall 26 when said first piston 21 is in said first conduit opening configuration, thus opening said first fluid passage.

**.** According to an embodiment, said second piston 23 comprises a second gasket 38 of second piston configured to form a seal with said second wall 28 when said second piston 23 is in said second conduit closing configuration.

**.** According to an embodiment, said second gasket 38 of second piston is spaced apart from said second wall 28 when said second piston 38 is in said second conduit opening configuration, thus opening said second fluid passage.

**.** According to an embodiment, said second gasket 33 of first piston is an annular gasket adapted to be fitted onto a first piston body. According to an embodiment, said second gasket 38 of second piston is a gasket adapted to be fitted onto a second piston body of said second piston 38.

**.** According to an embodiment, said second gasket 33 of first piston and said second gasket 39 of second piston are annular O-rings or V-rings housed in a respective annular seat of the respective piston 21, 23. According to an embodiment, said second gasket 33 of first piston and/or said second gasket 39 of second piston is made of a polymer material compatible with a brake fluid.

**.** According to an embodiment, said first piston 21 comprises a first piston head 34.

**.** According to an embodiment, said second gasket 33 of first piston is an annular gasket adapted to be inserted into a respective axial annular seat made on said first piston head 34 as a groove accessible from a direction parallel to the longitudinal direction X-X of first seat. The second gasket 33 of first piston is thus configured to abut axially against the first wall 26 to form a seal.

**.** According to an embodiment, said first piston head 34 comprises a first sealing surface 35 adapted to form a geometric seal by abutting against said first wall 26. According to an embodiment, the second gasket 33 of first piston is said first sealing surface 35. According to an embodiment, the second gasket 33 of first piston is a metal surface of the body of the first piston.

**.** According to an embodiment, said first wall 26 and said first sealing surface 35 have a surface roughness such that they form a hydraulic seal when abutting against each other.

**.** According to an embodiment, said second piston 23 comprises a second piston head 39.

**.** According to an embodiment, said second gasket 38 of second piston is an annular gasket adapted to be inserted into a respective axial seat made on said second piston head 39 as a groove accessible from a direction parallel to the longitudinal direction X'-X' of second seat. The second gasket 38 of second piston is thus configured to abut axially against the second wall 28 to form a seal.

**.** According to an embodiment, said second piston head 39 comprises a second sealing surface 40 adapted to form a geometric seal by abutting against said second wall 28. According to an embodiment, said second gasket 38 of second piston is said second sealing surface 40. According to an embodiment, said second gasket 38 of second piston is a metal surface of the body of the second piston.

**.** According to an embodiment, said second wall 28 and said second sealing surface 40 have a surface roughness such that they form a hydraulic seal when abutting against each other.

**.** According to an embodiment, said first sealing surface 35 and said first wall 26, respectively, and said second sealing surface 40 and said second wall 28, respectively, form an annular geometric seal.

**.** According to an embodiment, said first sealing surface 35 belongs to a first tapered surface of the first piston head 34.

**.** According to an embodiment, said second sealing surface 40 belongs to a second tapered surface of the second piston head 39.

**.** According to an embodiment, the respective piston head of each piston wedges into said first wall 26 or said second wall 28 with the respective annular gasket interposed therebetween.

**.** According to an embodiment, said first wall 26 laterally and radially delimits, with respect to said longitudinal direction X-X of first seat, a portion of said first valve seat 15, preferably a first circuit side portion of said first conduit portion 12.

**.** According to an embodiment, said first wall 26 axially delimits, orthogonally to said longitudinal direction X-X of first seat, a portion of said first valve seat 15, preferably a first circuit side portion of said first conduit portion 12. According to an embodiment, said first wall 26 is a circular crown orthogonal to said longitudinal direction X-X of first seat.

**.** According to an embodiment, said first wall 26 is a connecting wall between two segments of said first conduit portion 12, which forms a first section narrowing of said first conduit portion 12.

**.** According to an embodiment, said second wall 28 laterally delimits, radially with respect to said longitudinal direction X'-X' of second seat, a portion of said second valve seat 15, preferably a second circuit side portion of said second conduit portion 13.

**.** According to an embodiment, said second wall 28 axially delimits, orthogonally to said longitudinal direction X'-X' of second seat, a portion of said second valve seat 15, preferably a second circuit side portion of said second conduit portion 13. According to an embodiment, said second wall 28 is a circular crown orthogonal to said longitudinal direction X'-X' of second seat.

**.** According to an embodiment, said first wall 26 and said second wall 28 are tapered surfaces having a greater tapering angle than the taper angle of said first sealing surface 35 and said second sealing surface 40 with respect to the longitudinal extension direction X-X, X'-X' of the respective valve seat.

**.** According to an embodiment, said second sealing surface 40 and said second wall 28, said first sealing surface 35, and said first wall 26 are conical surfaces.

**.** According to an embodiment, said second wall 28 is a connecting wall between two segments of said second conduit portion 13, which forms a second section narrowing of said second conduit portion 13.

**.** According to an embodiment, said second gasket 33 of first piston and said first gasket 31 of first piston have the same sealing diameter D. According to an embodiment, said second gasket 38 of second piston and said first gasket 36 of second piston have the same sealing diameter D.

**.** Section narrowing means a radial narrowing of the conduit moving forward along the longitudinal direction of the conduit and/or the valve seat.

**.** According to an embodiment, said first connecting portion 6 partially delimits said first conduit portion 12 with said first wall 26. According to an embodiment, said second connecting portion 7 partially delimits said second conduit portion 13 with said second wall 28.

**.** According to an embodiment, said pressure adjusting mechanism 5 comprises a first reinforcement 41 in which said first elastic element 22 is housed, where said first reinforcement 41 forms a first bottom of the first valve seat 15. According to an embodiment, said pressure adjusting mechanism 5 comprises a first transmission element 42.

**.** According to an embodiment, said first elastic element 22 is connected to said first piston 21 by means of said first transmission element 42.

**.** According to an embodiment, said first transmission element 42 is adapted to receive a first piston engagement portion 43 to connect to the first piston 21 by positive coupling and/or by interference and/or by interlocking/engagement.

**.** According to an embodiment, said first transmission element 42 is adapted to abut against a first piston thrust portion 44.

**.** According to an embodiment, said pressure adjusting mechanism 5 comprises a second reinforcement 45 in which said second elastic element 24 is housed, where said first reinforcement 45 forms a second bottom of the second valve seat 16.

**.** According to an embodiment, said pressure adjusting mechanism 5 comprises a second transmission element 46.

**.** According to an embodiment, said second elastic element 24 is connected to said second piston 23 by means of said second transmission element 46.

**.** According to an embodiment, said second transmission element 46 is adapted to receive a second piston engagement portion 47 to connect to the second piston 23 by positive coupling and/or by interference and/or by interlocking/engagement.

**.** According to an embodiment, said second transmission element 46 adapted to abut against a second piston thrust portion 48.

**.** According to an embodiment, said first elastic element 22 and said second elastic element 24 comprise a first spring and a second spring, respectively.

**.** According to an embodiment, said first spring and said second spring are a wire spring.

**.** According to an embodiment, said wire spring is sized so as to allow the respective piston 21, 23 to retract when the respective pressure P1, P2 applied by the respective fluid on the surface facing the first circuit or the second circuit of the piston head is higher than the threshold pressure Ps1.

**.** According to an embodiment, said first transmission element 42 and said second transmission element 46 have a first T-shaped body and a second T-shaped body, respectively, having a T-shaped section and having a longitudinal through-hole.

**.** According to an embodiment, said first T-shaped body and/or said first transmission element 42 has a first elongated stem and a first enlarged head.

**.** According to an embodiment, the first elongated stem is accommodated inside the turns of the first spring, where an end turn of the first spring abuts against an outer first-head surface of said first enlarged head.

**.** According to an embodiment, said first elongated stem internally defines a first engagement seat to engage said first piston engagement portion 43 by interference and/or by positive coupling and/or by engagement. According to an embodiment, said first piston thrust portion 44 abuts against an inner first-head surface of said first enlarged head.

**.** According to an embodiment, said second T-shaped body and/or said second transmission element 46 has a second elongated stem and a second enlarged head.

**.** According to an embodiment, the second elongated stem is accommodated inside the turns of the second spring, where an end turn of the second spring abuts against an outer second-head surface of said second enlarged head.

**.** According to an embodiment, said second elongated stem internally defines a second engagement seat to engage said second piston engagement portion 47 by interference and/or by positive coupling and/or by engagement.

**.** According to an embodiment, said second piston thrust portion 48 abuts against an inner second-head surface of said second enlarged head.

**.** According to an embodiment, the first spring and the second spring are fixed to the first bottom wall 25 and the second bottom wall 27, respectively.

**.** According to an embodiment, said first transmission element 42 is configured to abut against a respective abutment portion of the first reinforcement 41 when said first piston 21 is in said first conduit opening configuration, defining the maximum stroke by which said first piston can move between the first conduit closing configuration and the first conduit opening configuration.

**.** According to an embodiment, the outer first-head surface of said first enlarged head of the first transmission element 41 is configured to abut against the abutment portion of the first reinforcement 41 when said first piston 21 is in said first conduit opening configuration. According to an embodiment, the outer first-head surface of said first enlarged head of the first transmission element 41, when said first piston 21 is in said first conduit closing configuration, is at a distance equal to the maximum stroke of the first piston from the abutment portion of the first reinforcement 41.

**.** According to an embodiment, said second transmission element 46 is configured to abut against a respective abutment portion of the second reinforcement 45 when the second piston 23 is in said second conduit opening configuration, defining the maximum stroke by which the first piston can move between the second conduit closing configuration and the second conduit opening configuration.

**.** According to an embodiment, the outer second-head surface of said second enlarged head of the second transmission element is configured to abut against the respective abutment portion of the second reinforcement 45 when the second piston 23 is in said second conduit opening configuration. According to an embodiment, the outer second-head surface of said second enlarged head of the second transmission element, when the second piston 23 is in said second conduit closing configuration, is at a distance equal to the maximum stroke of the second piston from the abutment portion of the second reinforcement 45.

**.** According to an embodiment, said first valve seat 15 comprises at least partially said first conduit portion 12 and a first bottom portion 17. According to an embodiment, said first bottom wall 25 separates said first valve seat 15 and said second valve seat 16. According to an embodiment, said first bottom portion 17 comprises said first bottom wall 25. According to an embodiment, said first bottom wall 25 comprises at least a first bottom opening in fluid communication with the external environment without compressing air or fluids in the first bottom portion 17.

**.** According to an embodiment, said third conduit portion 14 leads with said first valve side opening 18 into said first valve seat 15. According to an embodiment, said first valve side opening 18 is defined on a first side wall 29 of said first conduit portion 12.

**.** According to an embodiment, at least one portion of said first valve seat 15 is fluidly connectable to at least one portion of said second valve seat 16 by means of said third conduit portion 14.

**.** According to an embodiment, said second valve seat 16 comprises at least partially said second conduit portion 13 and a second bottom portion 19. According to an embodiment, said second bottom portion 19 comprises said second bottom wall 27. According to an embodiment, said second bottom wall 27 separates said second valve seat 16 and said first valve seat 15. According to an embodiment, said second bottom wall 28 comprises at least a second bottom opening in fluid communication with the external environment to allow said piston to retract without compressing air or fluids in the second bottom portion 17. According to an embodiment, said third conduit portion 14 leads with said second valve side opening 20 into said second valve seat 16, where said second valve side opening 20 is defined on a second side wall 30 of said second conduit portion 13.

**.** According to an embodiment, said first bottom portion 17 comprises a first segment 49 with enlarged section and a first segment 50 with reduced section. According to an embodiment, said first piston 21 is sealingly slides in said first segment 50 with reduced section against said first sliding wall 32. According to an embodiment, said first reinforcement 41 is housed in said first segment 49 with enlarged section. According to an embodiment, said first reinforcement 41 comprises said first bottom wall 25. According to an embodiment, said first reinforcement 41 comprises a first axial edge 51 opposite to said first bottom wall 25.

**.** According to an embodiment, said second bottom portion 19 comprises a second segment 52 with enlarged section and a second segment 53 with reduced section, where said second piston 23 sealingly slides in said second segment 53 with reduced section against said second sliding wall 37. According to an embodiment, said second reinforcement 45 is housed in said second segment 52 with enlarged section. According to an embodiment, said second reinforcement 45 comprises said second bottom wall 27, where said second reinforcement 45 comprises a second edge 54 opposite to said second bottom wall 27. According to an embodiment, a locking gasket is interposed between said first bottom wall 25 and said second bottom wall 27.

**.** According to an embodiment, said first transmission element 42 is configured to abut against a respective abutment portion of the first reinforcement 41 when said first piston 21 is in said first conduit opening configuration, defining the maximum stroke by which said first piston can move between the first conduit closing configuration and the first conduit opening configuration.

**.** According to an embodiment, said second transmission element 46 is configured to abut against a respective abutment portion of the second reinforcement 45 when the second piston 23 is in said second conduit opening configuration, defining the maximum stroke by which the first piston can move between the second conduit closing configuration and the second conduit opening configuration.

**.** According to an embodiment, said pressure balancing device 1 comprises a first bleeding portion 55 and a second bleeding portion 56 adapted to connect to said third conduit portion 14 so as to bleed said pressure balancing device 1. According to an embodiment, said first bleeding portion 55 and said second bleeding portion 56 are made in one piece with said device body 4.

**.** According to an embodiment, said first connecting portion 6 and said second connecting portion 7 are made in one piece separate from said device body 4 and are sealingly connected to said device body 4 at said at least a first circuit side opening 9 and said at least a second circuit side opening 61, for example by means of the interposition of ring gaskets 62 with said device body 4. According to an embodiment, said first connecting portion 6 and said second connecting portion 7 are made in one piece with said device body 4 and delimit said at least a first circuit side opening 9 and said at least a second circuit side opening 61, respectively.

**.** According to an embodiment, said device body 4 comprises a first half-body 57 and a second half-body 5. According to an embodiment, the first half-body 57 comprises said first conduit portion 12, a first half of said third conduit portion 14, said the first valve seat 15. According to an embodiment, the second half-body 58 comprises said second conduit portion 13, a second half of said third conduit portion 14, said the second valve seat 16. According to an embodiment, said first half of said third conduit portion 14 is fluid-tightly connected to said second half of said third conduit portion 14, for example by means of an interposed gasket 59. According to an embodiment, the first half-body 57 is constrained to the second half-body 58 by means of at least a first pair of connecting elements 60, for example of the screw-type, and/or a second pair of connecting elements 60, for example of the screw-type, accommodated in respective connecting element seats made in the first half-body 57 and the second half-body 58.

**.** The present invention also relates to a braking system generally indicated by reference numeral 100.

**.** The braking system 100 comprises at least a first circuit 2 comprising at least a first pressure chamber of a brake actuating device 103 fluidly connected to a first braking actuation device 101 to brake a wheel of a vehicle. The braking system 100 comprises at least a second circuit 3 comprising at least a second pressure chamber of said brake actuating device 103 fluidly connected to a second braking actuation device 102 to brake said wheel. The braking system 100 comprises a pressure control device 1 according to any one of the embodiments described above, connected to said first circuit 2 and said second circuit 3 in parallel with said first braking actuation device 101 and said second braking actuation device 102 and to said first pressure chamber and said second pressure chamber.

**.** By virtue of the system 100, it is possible, by activating said brake actuating device 103, when the first circuit pressure P1 and the second circuit pressure P2 are higher than said threshold pressure Ps, to align the first circuit pressure P1 and the second circuit pressure P2 with the actuating pressure Pa, to actuate each braking actuation device 101, 102 with said actuating pressure Pa.

**.** By virtue of the system 100, it is possible, by activating said brake actuating device 103, to actuate only one of said first braking actuation device 101 and said second braking actuation device 102 with said actuating pressure Pa when one of said first circuit pressure P1 and said second circuit pressure P2 is lower than said threshold pressure Ps.

**.** According to an embodiment, said brake actuating device 103 is a lever-operated tandem master cylinder, or said brake actuating device 103 comprises two separate lever-operated brake master cylinders.

**.** According to an embodiment, each braking actuation device 101, 102 is a brake caliper connected from opposite sides to said wheel.

**.** According to an embodiment, said wheel is a front wheel of a motorcycle.

**.** The present invention also relates to a method of controlling the actuating pressure of at least one braking actuation device in a braking system 100. The braking system 100 comprises at least a first circuit 2 comprising at least a first pressure chamber of a brake actuating device 103 fluidly connected to a first braking actuation device 101 to brake a vehicle; at least a second circuit 3 comprising at least a second pressure chamber of said brake actuating device 103 fluidly connected to a second braking actuation device 102 to brake said vehicle.

**.** Said method comprises the steps of:
- providing a pressure control device 1 comprising a first conduit portion 12 fluidly connectable to the first circuit 2 and a second conduit portion 13 fluidly connectable to the second circuit 3,
- connecting said first circuit 2 to said second circuit 3 with said pressure control device 1 arranged in parallel with said first braking actuation device 101 and said second braking actuation device 102 and to said first pressure chamber and said second pressure chamber, by fluidly connecting the first conduit portion 12 to the first circuit 2 and the second conduit portion 13 to the second circuit 3,
- actuating the brake actuating device 103 by compressing a first circuit fluid in the first conduit portion 12 at a first circuit pressure P1 and a second circuit fluid in the second conduit portion 13 at a second circuit pressure P2,
- until at least one of the first circuit pressure P1 and the second circuit pressure P2 is lower than a threshold pressure Ps, preventing fluid passages between the first conduit portion 12 and the second conduit portion 13, and so as to sustain the first circuit pressure P1 or the second circuit pressure P2 to reach the actuating pressure Pa, and actuate the braking actuation device 101 or the second braking actuation device 102 with said actuating pressure Pa,
- and when the first circuit pressure P1 and the second circuit pressure P2 are higher than a threshold pressure Ps, fluidly connecting the first conduit portion 12 and the second conduit portion 13, so as to align the first circuit pressure P1 and the second circuit pressure P2 with an actuating pressure Pa and actuate with said actuating pressure Pa each braking actuation device 101, 102 with said actuating pressure Pa.

**.** According to a mode of operation, said pressure control device 1 is a device according to one of the embodiments described above. According to a mode of operation, said system 100 is a system according to one of the embodiments described above.

**.** According to a general embodiment, a pressure control device 1 for a braking system 100 comprises a device body 4 in which at least one conduit 8, comprising at least a first conduit portion 12 and at least a second conduit portion 13 is defined.

**.** The first conduit portion 12 is fluidly connectable to a first circuit 2 to receive a first circuit fluid.

**.** Said first circuit 2 comprises a first pressure chamber of a brake actuating device 103 to pressurize the first circuit fluid at a first circuit pressure P1, where the first pressure chamber is fluidly connected to a first braking actuation device 101 to brake a wheel of a vehicle.

**.** The second conduit portion 13 is fluidly connectable to a second circuit 3 to receive a second circuit fluid, where said second circuit 3 comprises a second pressure chamber of said brake actuating device 103 to pressurize the second circuit fluid at a second circuit pressure P2.

**.** The second pressure chamber is fluidly connected to a second braking actuation device 102 to brake said wheel of a vehicle.

**.** Said pressure control device 1 for a braking system 100 further comprises a pressure control mechanism 5 configured to control the first circuit pressure P1 and/or the second circuit pressure P2 to reach an actuating pressure Pa.

**.** Said pressure control mechanism 5 is housed at least partially in said conduit 8.

**.** Said pressure control mechanism 5 is configured to fluid-tightly separate a first volume V1 delimited by said first conduit portion 12 from a second volume V2 delimited by said second conduit portion 13.

**.** Said pressure control mechanism 5 is configured to control a relative volume variation of the first volume V1 with respect to the second volume V2, or vice versa, within a maximum relative volume variation by preventing fluid passages from said first conduit portion 12 to said second conduit portion 13, or vice versa, so as to align said first circuit pressure P1 and said second circuit pressure P2 with said actuating pressure Pa, when said first circuit pressure P1 and said second circuit pressure P2 are sufficient to actuate the respective braking device 101, 102, and so as to sustain said first circuit pressure P1 or said second circuit pressure P2 reaching said actuating pressure Pa, preventing said relative volume variation beyond said maximum relative volume variation by avoiding fluid passages from said first conduit portion 12 to said second conduit portion 13, or vice versa, when either the second circuit pressure P2 or the first circuit pressure P1 is insufficient to actuate the respective braking device 101, 102.

**.** According to an embodiment, said pressure control device 1 comprises a first connecting portion 6 to fluidly connect the first conduit portion 12 to the first circuit 2, and a second connecting portion 7 to connect the second conduit portion 13 to the second circuit 3.

**.** Said pressure control mechanism 5 comprises a membrane 9, which fluid-tightly separates said first conduit portion 12 and said second conduit portion 13.

**.** Said membrane 9 is elastically movable through elastic means between a first configuration and a second configuration about a resting configuration at least along a longitudinal extension direction X-X of said conduit 8.

**.** In said resting configuration, said membrane 9 is in a resting position.

**.** Between said resting configuration and said first configuration, at least one portion of said membrane 9 is moved forward by a first stroke along said longitudinal extension direction X-X toward said first connecting portion 6 within a first maximum stroke, where, between said resting configuration and said second configuration, said at least one portion of said membrane 9 is moved forward by a second stroke along said longitudinal extension direction X-X toward said second connecting portion 7 within a second maximum stroke, by increasing or decreasing the relative volume variation of the first volume V1 with respect to the second volume V2, or vice versa.

**.** According to an embodiment, said membrane 9 comprises a membrane body 10, where said membrane body 10 comprises a membrane edge 11 constrained in a fluid-tight manner to a conduit side wall 31 of said conduit 8 in a fixed position.

**.** Said membrane body 10 comprises said elastic means and is elastically deformable in the direction of said first connecting portion 6 and in the direction of said second connecting portion 7 by a respective deformation corresponding to said first maximum stroke and said second stroke.

**.** According to an embodiment, said maximum relative volume variation is equal to the volume swept by said membrane 9 in the movement from said resting configuration to said first configuration when the first stroke is the first maximum stroke or in the movement from said resting configuration to said second configuration when the second stroke is the second maximum stroke.

**.** According to an embodiment, said pressure control mechanism 5 comprises a shell 14 defining a membrane seat 15 for membrane 9 therein, where the membrane 9 is movable within said maximum relative volume variation, where the shell 14 comprises a first half-shell 16 and a second half-shell 17, where the membrane 9 is interposed between the first half-shell 16 and the second half-shell 17, forming a frame for said membrane 9 which prevents the membrane 9 from moving outside the membrane seat 15.

**.** According to an embodiment, the first half-shell 16 and the second half-shell 17 each comprise at least one shell opening 18 such that the membrane has a first membrane surface 19 at least partially directly facing the first connecting portion 6 contacted by the first circuit fluid and a second membrane surface 20 at least partially directly facing the second connecting portion 7 contacted by the second circuit fluid.

**.** According to an embodiment, said first half-shell 16 and said second half-shell 17 are permeable to said first circuit fluid and said second circuit fluid.

**.** According to an embodiment, said membrane 9 is impermeable to said first circuit fluid and said second circuit fluid.

**.** According to an embodiment, said first half-shell 16 comprises a first plate-like body 21 and a first annular flange 22.

**.** Said second half-shell 17 comprises a second plate-like body 23 and a second annular flange 24.

**.** Said first plate-like body 21 comprises a first annular edge 25 facing the side wall of said conduit 8.

**.** Said first annular flange 22 projects from said first plate-like body 21 in the direction of said second connecting portion 7 at a first radial distance from said first annular edge 25.

**.** Said second plate-like body 23 comprises a second annular edge 26 facing the side wall of said conduit 8.

**.** Said second annular flange 24 projects from said second plate-like body 23 in the direction of said first connecting portion 6 at a second radial distance from said second annular edge 26 equal to said first radial distance, so as to face said first annular flange 22.

**.** Said first annular flange 22 fluid-tightly abuts against said second annular flange 24 with said membrane 9 interposed therebetween.

**.** Said first annular edge 25, said first annular flange 22, said second annular flange 24, and said second annular edge 26 form a U-shaped profile adapted to accommodate a sealing gasket adapted to form a seal with the side wall of said conduit 8.

**.** Said membrane edge 11 is a sealing gasket configured to form a seal with a wall of said conduit, where said membrane edge 11 has a greater thickness than the thickness of the membrane body 10.

**.** Each plate-like body 21, 23 is crossed by at least one opening 18, preferably a plurality of openings 18.

**.** According to an embodiment, said membrane 9 comprises a plurality of valleys 27 and a plurality of ridges 28 so as to increase the surface facing the first circuit and the second circuit, preferably said plurality of valleys 27 and said plurality of ridges 28 are concentric.

**.** According to an embodiment, said membrane 9 is bellows-shaped.

**.** According to an embodiment, said device body 4 comprises a first half-body 29 and a second half-body 30, connected to each other, for example by means of threading, such as by a threaded outer surface of first half-body and a threaded inner surface of second half-body, or vice versa.

**.** Said first half-body 29 delimits said first conduit portion 12.

**.** Said second half-body 30 delimits said second conduit portion 13.

**.** According to an embodiment, said device body 4 delimits a third conduit portion partially comprising the first conduit portion 12 and the second conduit portion 13 and having a greater section than the sections of the first conduit portion 12 and the second conduit portion 13 at opposite ends of the conduit 8, defining a section enlargement of the conduit 8.

**.** According to an embodiment, said device body 4 defines a mechanism seat radially delimited with respect to the longitudinal conduit direction X-X by a conduit side wall 31, and delimited along said conduit extension direction X-X by a first radial crown 32 and a second radial crown 33 of said second half-body 30, where said pressure control mechanism 5 forms a radial seal with said conduit side wall 31 and axially abuts against said first radial crown 32 and said second radial crown 33.

**.** According to an embodiment, a braking system 100 comprises:
- at least a first circuit 2 comprising at least a first pressure chamber of a brake actuating device 103 fluidly connected to a first braking actuation device 101 to brake a wheel of a vehicle,
- at least a second circuit 3 comprising at least a second pressure chamber of said brake actuating device 103 fluidly connected to a second braking actuation device 102 to brake said wheel,
- a pressure control device 1 according to any one of the embodiments described above, connected to said first circuit 2 and said second circuit 3 in parallel with said first braking actuation device 101 and said second braking actuation device 102 and to said first pressure chamber and said second pressure chamber so that, by activating said brake actuating device 103, each braking actuation device 101, 102 is actuated with said actuating pressure Pa, when the first circuit pressure P1 and the second circuit pressure P2 are sufficient to actuate the respective braking actuation device 101, 102, and one of said first braking actuation device 101 and said second braking actuation device 102 is actuated with said actuating pressure Pa when one of said first circuit pressure P1 and said second circuit pressure P2 is insufficient to actuate the respective braking actuation device 101, 102.

**.** According to an embodiment, said brake actuating device 103 is a lever-operated tandem master cylinder, or said brake actuating device 103 comprises two separate lever-operated brake master cylinders.

**.** According to an embodiment, each braking actuation device 101, 102 is a brake caliper connected from opposite sides to said wheel.

**.** According to an embodiment, said wheel is a front wheel of a motorcycle.

**.** According to a general embodiment, a method of controlling the actuating pressure of at least one braking actuation device in a braking system 100 is described below, where said braking system 100 comprises:
- at least a first circuit 2 comprising at least a first pressure chamber of a brake actuating device 103 fluidly connected to a first braking actuation device 101 to brake a vehicle,
- at least a second circuit 3 comprising at least a second pressure chamber of said brake actuating device 103 fluidly connected to a second braking actuation device 102 to brake said vehicle.

**.** Said method comprises the steps of:
- providing a pressure control device 1 comprising a first conduit portion 12 fluidly connectable to the first circuit 2 and a second conduit portion 13 fluidly connectable to the second circuit 3, where said first conduit portion 12 is fluidly isolated from said second conduit portion 13, where said first conduit portion 12 delimits a first volume V1, and where said second conduit portion 13 delimits a second volume V2,
- connecting said first circuit 2 to said second circuit 3 with said pressure control device 1 arranged in parallel with said first braking actuation device 101 and said second braking actuation device 102 and to said first pressure chamber and said second pressure chamber, by fluidly connecting the first conduit portion 12 to the first circuit 2 and the second conduit portion 13 to the second circuit 3,
- actuating the brake actuating device 103 by compressing a first circuit fluid in the first conduit portion 12 at a first circuit pressure P1 and a second circuit fluid in the second conduit portion 13 at a second circuit pressure P2,
- perform a relative volume variation of the first volume V1 with respect to the second volume V2 within a maximum relative volume variation so as to
   align the first circuit pressure P1 and the second circuit pressure P2 with an actuating pressure Pa and actuate with said actuating pressure Pa each braking actuation device 101, 102 with said actuating pressure Pa, when the first circuit pressure P1 and the second circuit pressure P2 are sufficient to actuate the respective braking actuation device 101, 102,
   and so as to
   sustain the first circuit pressure P1 or the second circuit pressure P2 to reach the actuating pressure Pa, preventing the relative volume variation of the first volume V1 and the second volume V2 beyond said maximum relative volume variation, and actuate the braking actuation device 101 or the second braking actuation device 102 with said actuating pressure Pa, and when the second circuit pressure P2 or the first circuit pressure P1 is insufficient to actuate the second braking actuation device 102 or the first braking actuation device 101.

### LIST OF REFERENCE SIGNS

- 1: Pressure control device
- 2: first circuit
- 3: second circuit
- 4: device body
- 5: pressure adjusting mechanism
- 6: first connecting portion
- 7: second connecting portion
- 8: conduit
- 9: first circuit side opening
- 10: first valve
- 11: second valve
- 12: first conduit portion
- 13: second conduit portion
- 14: third conduit portion
- 15: first valve seat
- 16: second valve seat
- 17: first bottom portion
- 18: first valve side opening
- 19: second bottom portion
- 20: second valve side opening
- 21: first piston or first shutter element
- 22: first elastic element
- 23: second piston or second shutter element
- 24: second elastic element
- 25: first bottom wall
- 26: first wall
- 27: second bottom wall
- 28: second wall
- 29: first side wall
- 30: second side wall
- 31: first gasket of first piston
- 32: first sliding wall
- 33: second gasket of first piston
- 34: first piston head
- 35: first sealing surface
- 36: first gasket of second piston
- 37: second sliding wall
- 38: second gasket of second piston
- 39: second piston head
- 40: second sealing surface
- 41: first reinforcement
- 42: first transmission element
- 43: first piston engagement portion
- 44: first piston thrust portion
- 45: second reinforcement
- 46: second transmission element
- 47: second piston engagement portion
- 48: second piston thrust portion
- 49: first segment with enlarged section
- 50: first segment with reduced section
- 51: first axial edge
- 52: second segment with enlarged section
- 53: first segment with reduced section
- 54: second axial edge
- 55: first bleeding portion
- 56: second bleeding portion
- 57: first half-body
- 58: second half-body
- 59: interposed gasket
- 60: connecting elements
- 61: second circuit side opening
- 62: ring gasket

- 100: braking system
- 101: first braking device or first brake caliper
- 102: second braking device or second brake caliper
- 103: brake actuating device
- P1: first circuit pressure
- P2: second circuit pressure
- Ps: threshold pressure
- Pa: actuating pressure
- D: sealing diameter
- X-X: longitudinal direction of first seat
- X'-X': longitudinal direction of second seat
- Y-Y: first engagement direction
- Y'-Y': second engagement direction

## Claims

1. A pressure control device (1) for a braking system (100), comprising:
- a device body (4) partially delimiting at least a first circuit side opening (9), at least a second circuit side opening (61), and at least one conduit (8) putting said at least a first circuit side opening (9) and said at least a second circuit side opening (61) in fluid communication, wherein said at least one conduit (8) comprises at least a first conduit portion (12) and at least a second conduit portion (13),
wherein the first conduit portion (12) is fluidly connectable to a first circuit (2) to receive a first circuit fluid, wherein said first circuit (2) comprises a first pressure chamber of a brake actuating device (103) to pressurize the first circuit fluid at a first circuit pressure (P1), wherein the first pressure chamber is fluidly connected to a first braking actuation device (101) to brake a wheel of a vehicle,
wherein the second conduit portion (13) is fluidly connectable to a second circuit (3) to receive a second circuit fluid, wherein said second circuit (3) comprises a second pressure chamber of said brake actuating device (103) to pressurize the second circuit fluid at a second circuit pressure (P2), wherein the second pressure chamber is fluidly connected to a second braking actuation device (102) to brake a wheel of a vehicle,
- a pressure control mechanism (5) configured to control the first circuit pressure (P1) and/or the second circuit pressure (P2) to reach an actuating pressure (Pa),
wherein said pressure control mechanism (5) is housed at least partially in said conduit (8), wherein
- when at least one of said first circuit pressure (P1) and said second circuit pressure (P2) is lower than a threshold pressure (Ps), said pressure control mechanism (5) is configured to prevent fluid passages between said first conduit portion (12) and said second conduit portion (13), or vice versa, so as to sustain at least one of said first circuit pressure (P1) and said second circuit pressure (P2) which is higher than said threshold pressure (P2) up to said actuating pressure (Pa) to actuate either the first braking device (101) or the second braking device (102)
- and when the first circuit pressure (P1) and the second circuit pressure (P2) are both higher than a threshold pressure (Ps), said pressure control mechanism (5) is configured to fluidly connect the first conduit portion (12) and the second conduit portion (13), so as to align said first circuit pressure (P1) and said second circuit pressure (P2) with said threshold pressure (Pa) to actuate the first braking device (101) and the second braking device (102) with said actuating pressure (Pa).

2. A pressure control device (1) according to the preceding claim,
wherein said conduit (8) comprises a third conduit portion (14) adapted to fluidly connect said at least a first conduit portion (12) and said at least a second conduit portion (13),
wherein said pressure adjusting mechanism (5) comprises a first valve (10) housed at least partially in said first conduit portion (12) and a second valve (11) housed at least partially in said second conduit portion (13),
wherein said third conduit portion (14) extends between a first valve side opening (18) in fluid communication with said first conduit portion (12) and a second valve side opening (20) in fluid communication with said second conduit portion,
wherein said first valve (10) is configured to open and fluid-tightly close said first valve side opening (18) in a reversible manner, wherein when the first circuit pressure (P1) is lower than said threshold pressure (Ps), said first valve (10) closes said first valve side opening (18) preventing fluid passages from said first conduit portion (12) to said third conduit portion (14), and vice versa, and wherein when the first circuit pressure (P1) is either higher than or equal to said threshold pressure (Ps), said first valve (10) opens said first valve side opening (18) by fluidly connecting said first conduit portion (12) to said third conduit portion (14), and vice versa, and wherein
said second valve (11) is configured to open and fluid-tightly close said second valve side opening (20) in a reversible manner, wherein when the second circuit pressure (P2) is lower than said threshold pressure (Ps), said second valve (11) closes said second valve side opening (20) preventing fluid passages from said second conduit portion (12) to said third conduit portion (14), and vice versa, and wherein when the second circuit pressure (P2) is either higher than or equal to said threshold pressure (Ps), said second valve (11) opens said second valve side opening (20) by fluidly connecting said second conduit portion (12) to said third conduit portion (14), and vice versa,
and/or wherein said threshold pressure (Ps) is between 1 bar and 10 bars, preferably between 1 bar and 4 bars, even more preferably between 1 bar and 3 bars,
and/or wherein said pressure control device (1) comprises a first connecting portion (6) to fluidly connect the first conduit portion (12) to the first circuit (2), and a second connecting portion (7) to connect the second conduit portion (13) to the second circuit (3).

3. A pressure control device (1) according to the preceding claim,
wherein
- said first valve (10) comprises a first piston or first shutter element (21), housed in a first valve seat (15) delimited by said device body (4) and comprising at least partially said first conduit portion (12),
wherein said first piston (21) is movable with respect to said device body (4), in said first valve seat (15), reversibly between:
- a first conduit closing configuration, in which when the first circuit pressure (P1) is lower than the threshold pressure (Ps), said first piston (21) forms a seal with a first wall (26) of said first valve seat (15) preventing a fluid passage from said first connecting portion (6) to said third conduit portion (14),
- and at least a first conduit opening configuration in which, when the first circuit pressure (P1) is at least equal to or higher than said threshold pressure (Ps), said first piston (21) is spaced apart from/avoids forming a seal with said first wall (26) and delimits a first fluid passage with said device body (4), which skims at least one head portion of said first piston (21) allowing a fluid passage from said first connecting portion (6) to said third conduit portion (14),
and/or wherein
- said second valve (11) comprises a second piston or second shutter element (23) housed in a second piston seat (16) delimited by said device body (4) and comprising at least partially said second conduit portion (13),
wherein said second piston (23) is movable with respect to said device body (4), in said second valve seat (16), reversibly between:
- a second conduit closing configuration, when said second circuit pressure (P2) is lower than the threshold pressure (Ps), wherein said second piston (23) forms a seal with a second wall (28) of said second valve seat (16) preventing a fluid passage from said second connecting portion (7) to said third conduit portion (14), or vice versa,
- and at least a second conduit opening configuration in which, when the circuit second pressure (P2) is at least equal to or higher than said threshold pressure (Ps), said second piston (23) is spaced apart from/avoids forming a seal with said second wall (28) and delimits a second fluid passage with said device body (4), which skims at least partially a head portion of said second piston (23) allowing a fluid passage from said first connecting portion (7) to said third conduit portion (14),
and/or wherein said first valve (10) and said second valve (11) are one-way valves
and/or wherein
said first valve seat (15) extends along a longitudinal direction (X-X) of first valve,
said second valve seat (16) extends along a longitudinal direction (X'-X') of second valve,
wherein said third conduit portion (14) engages in said first valve seat (15) and said second valve seat (16) according to respective engagement directions (Y-Y, Y'-Y'), which are incident and/or transverse to said longitudinal direction (X-X) of first valve and said longitudinal direction (X'-X') of second valve,
and/or wherein said longitudinal direction (X-X) of first valve and said longitudinal direction (X'-X') of second valve are parallel and/or coincident.

4. A pressure control device (1) according to the preceding claim,
wherein
- said first valve (10) comprises a first elastic element (22), housed in said first valve seat (15),
wherein said first elastic element (22) is interposed between said first piston (21) and said device body (4), preferably a first bottom wall (25) of said first valve seat (15), so as to constantly bias said first piston (21) to said first conduit closing configuration, wherein said first elastic element (22) is sized so that when the first circuit pressure (P1) is lower than the threshold pressure (Ps), said first piston is in said first conduit closing configuration,
- said second valve (11) comprises a second elastic element (24) housed in said second valve seat (16),
wherein said second elastic element (24) is interposed between said second piston (23) and said device body (4), preferably a second bottom wall (26) of said second valve seat (16), so as to constantly bias said second piston (23) to said second conduit closing configuration, wherein said second elastic element (24) is sized so that when the second circuit pressure (P2) is lower than the threshold pressure (Ps), said first piston is in said second conduit closing configuration.

5. A pressure balancing device (1) according to any one of the preceding claims 3 to 4, wherein
said first piston (21) comprises a first gasket (31) of first piston, wherein said first gasket (31) of first piston is configured to form a seal with a first sliding wall (32) of said first valve seat (15) in any position of said first piston (21) between said at least a first conduit opening configuration and said first conduit closing configuration fluidly isolating said first elastic element (22) from said third conduit portion (14) and/or said first circuit (2) ;
and/or wherein
said second piston (23) comprises a first gasket (36) of second piston, wherein said first gasket (36) of second piston is configured to form a seal with a second sliding wall (37) of said second valve seat (16) in any position of said second piston (23) between said at least a second conduit opening configuration and said second conduit closing configuration fluidly isolating said second elastic element (24) from said third conduit portion (14) and/or said second circuit (3).

6. A pressure control device (1) according to any one of the preceding claims 3 to 5, wherein
said first piston (21) comprises a second gasket (33) of first piston configured to form a seal with said first wall (26) when said first piston (21) is in said first conduit closing configuration, and wherein said second gasket (33) of first piston is spaced apart from said first wall (26) when said first piston (21) is in said first conduit opening configuration, opening said first fluid passage,
and/or wherein
said second piston (23) comprises a second gasket (38) of second piston configured to form a seal with said second wall (28) when said second piston (23) is in said second conduit closing configuration, and wherein said second gasket (38) of second piston is spaced apart from said second wall (28) when said second piston (38) is in said second conduit opening configuration, opening said second fluid passage.

7. A pressure control device (1) according to the preceding claim, wherein
said second gasket (33) of first piston is a gasket adapted to be fitted onto a first piston body or to be inserted into an axial annular seat made on a first piston head,
or wherein
said first piston (21) comprises a first piston head (34), wherein said first piston head (34) comprises a first sealing surface (35) adapted to form a geometric seal by abutting against said first wall (26), when said first piston (26) is in said first conduit closing configuration, wherein the second gasket (33) of first piston is said first sealing surface (35), wherein said first wall (26) and said first sealing surface (35) have a surface roughness such that they form a hydraulic seal when abutting against each other;
and/or wherein
said second gasket (38) of second piston is a gasket adapted to be fitted onto a second piston body of said second piston (38) or to be inserted into an axial seat made on a second piston head (39), or wherein
said second piston (23) comprises a second piston head (39), wherein said second piston head (39) comprises a second sealing surface (40) adapted to form a geometric seal by axially abutting against said second wall (28), when said second piston (23) is in said second conduit closing configuration, and wherein said sealing surface (40) is spaced apart from said second wall (28) when said second piston (23) is in said at least a second opening configuration, wherein second gasket (38) of second piston is said second sealing surface (40), wherein said second wall (28) and said second sealing surface (40) have a surface roughness such that they form a hydraulic seal when abutting against each other.

8. A pressure control device (1) according to any one of the preceding claims 6 to 7, wherein
said first wall (26) laterally delimits a portion of said first valve seat (15), preferably a first circuit side portion of said first conduit portion (12),
and/or
wherein said first wall (26) is a connecting wall between two segments of said first conduit portion (12), which forms a first section narrowing of said first conduit portion (12);
and/or wherein said second wall (28) laterally delimits a portion of said second valve seat (15), preferably a second circuit side portion of said second conduit portion (13),
and/or wherein said second wall (28) is a connecting wall between two segments of said second conduit portion (13), which forms a second section narrowing of said second conduit portion (13);
and/or wherein said first connecting portion (6) partially delimits said first conduit portion (12) with said first wall (26),
said second connecting portion (7) partially delimits said second conduit portion (13) with said second wall (28),
wherein said first sealing surface (35) and said first wall (26), respectively, and said second sealing surface (40) and said second wall (28), respectively, form an annular geometric seal,
wherein
said first sealing surface (35) and said second sealing surface (40) are tapered surfaces of the respective first piston head (34) and second piston head (39),
wherein said first wall (26) and said second wall (28) are tapered surfaces having a greater taper angle than the taper angle of said first sealing surface (35) and said second sealing surface (40) with respect to the longitudinal extension direction (X-X, X'-X') of the respective valve seat, preferably wherein said second sealing surface (40) and said second wall (28), said first sealing surface (35) and said first wall (26) are conical surfaces, such that the respective piston head wedges into said first wall (26) or said second wall (28) with the respective annular gasket interposed therebetween,
or wherein said second gasket (33) of first piston and said second gasket (39) of second piston are annular O-rings housed in an annular seat of the respective piston (21, 23), wherein said annular seat of the respective piston (21, 23) is an axial annular seat.

9. A pressure control device (1) according to any one of the claims 4 to 8,
wherein said pressure adjusting mechanism (5) comprises a first reinforcement (41) in which said first elastic element (22) is housed and a first transmission element (42), wherein said first reinforcement (41) forms a first bottom of the first valve seat (15),
wherein said first elastic element (22) is connected to said first piston (21) by means of said first transmission element (42),
wherein said first transmission element (42) is adapted to receive a first piston engagement portion (43) to connect to the first piston (21) by positive coupling and/or by interference and/or by interlocking/engagement,
wherein said first transmission element (42) is adapted to abut against a first piston thrust portion (44);
and/or wherein
said pressure adjusting mechanism (5) comprises a second reinforcement (45) in which said second elastic element (24) is housed and a second transmission element (47), wherein said second reinforcement (45) forms a second bottom of the second valve seat (16),
wherein said second elastic element (24) is connected to said second piston (23) by means of said second transmission element (47),
wherein said second transmission element (46) is adapted to receive a second piston engagement portion (47) to connect to the second piston (23) by positive coupling and/or by interference and/or by interlocking/engagement,
wherein said second transmission element (46) is adapted to abut against a second piston thrust portion (48).

10. A pressure control device (1) according to claim 9,
wherein said first elastic element (22) and said second elastic element (24) comprise a first spring and a second spring, respectively, wherein said first spring and said second spring are a wire spring, wherein said wire spring is sized so as to allow the respective piston (21, 23) to retract when the respective pressure (P1, P2) applied by the respective fluid on the surface facing the first circuit or the second circuit of the piston head is higher than the threshold pressure (Ps1),
and/or wherein said first transmission element (42) and said second transmission element (46) have a first T-shaped body and a second T-shaped body, respectively having a T-shaped section and having a longitudinal through-hole,
wherein said first T-shaped body has a first elongated stem and a first enlarged head,
wherein the first elongated stem is accommodated inside the turns of the first spring, wherein an end turn of the first spring abuts against an outer first-head surface of said first enlarged head,
wherein said first elongated stem internally defines a first engagement seat to engage said first piston engagement portion (43) by interference and/or by positive coupling and/or by engagement, wherein said first piston thrust portion (44) abuts against an inner first-head surface of said first enlarged head,
wherein said second T-shaped body has a second elongated stem and a second enlarged head,
wherein the second elongated stem is accommodated inside the turns of the second spring, wherein an end turn of the second spring abuts against an outer second-head surface of said second enlarged head,
wherein said second elongated stem internally defines a second engagement seat to engage said second piston engagement portion (47) by interference and/or by positive coupling and/or by engagement, wherein said second piston thrust portion (48) abuts against an inner second-head surface of said second enlarged head,
and/or wherein the first spring and the second spring are fixed to the first bottom wall (25) and the second bottom wall (27), respectively.

11. A pressure balancing device (1) according to any one of the preceding claims 2 to 10,
wherein said first connecting portion (6) and said second connecting portion (7) are made in one piece separate from said device body (4) and are sealingly connected to said device body (4) at said at least a first circuit side opening (9) and said at least a second circuit side opening (61), for example by interposition of ring gaskets (62) with said device body (4), or wherein
said first connecting portion (6) and said second connecting portion (7) are made in one piece with said device body (4) and delimit said at least a first circuit side opening (9) and said at least a second circuit side opening (61), respectively,
and/or wherein said device body (4) comprises a first half-body (57) and a second half-body (58),
wherein the first half-body (57) comprises said first conduit portion (12), a first half of said third conduit portion (14), said the first valve seat (15),
wherein the second half-body (58) comprises said second conduit portion (13), a second half of said third conduit portion (14), said the second valve seat (16),
wherein said first half of said third conduit portion (14) is fluid-tightly connected to said second half of said third conduit portion (14), for example by means of an interposed gasket (59),
wherein the first half-body (57) is constrained to the second half-body (58) by at least a first pair of connecting elements (60), for example of the screw-type, and/or a second pair of connecting elements (60), for example of the screw-type, accommodated in respective connecting element seats made in the first half-body (57) and the second half-body (58).

12. A braking system (100) comprising
- at least a first circuit (2) comprising at least a first pressure chamber of a brake actuating device (103) fluidly connected to a first braking actuation device (101) to brake a wheel of a vehicle,
- at least a second circuit (3) comprising at least a second pressure chamber of said brake actuating device (103) fluidly connected to a second braking actuation device (102) to brake said wheel,
- a pressure control device (1) according to any one of the preceding claims 1 to 11, connected to said first circuit (2) and
said second circuit (3) in parallel with said first braking actuation device (101) and said second braking actuation device (102) and to said first pressure chamber and said second pressure chamber so that, by activating said brake actuating device (103), each braking actuation device (101, 102) is actuated with said actuating pressure (Pa), when the first circuit pressure (P1) and the second circuit pressure (P2) are higher than said threshold pressure (Ps),
and one of said first braking actuation device (101) and said second braking actuation device (102) is actuated with said actuating pressure (Pa) when one of said first circuit pressure (P1) and said second circuit pressure (P2) is lower than said threshold pressure (Ps).

13. A braking system (100) according to the preceding claim, wherein said brake actuating device (103) is a lever-operated tandem master cylinder, or wherein said brake actuating device (103) comprises two separate lever-operated brake master cylinders,
and/or wherein each braking actuation device (101, 102) is a brake caliper connected from opposite sides to said wheel,
and/or wherein said wheel is a front wheel of a motorcycle.

14. A method of controlling the actuating pressure of at least one braking actuation device in a braking system (100), wherein said braking system (100) comprises
- at least a first circuit (2) comprising at least a first pressure chamber of a brake actuating device (103) fluidly connected to a first braking actuation device (101) to brake a vehicle,
- at least a second circuit (3) comprising at least a second pressure chamber of said brake actuating device (103) fluidly connected to a second braking actuation device (102) to brake said vehicle,
wherein said method comprises the steps of:
- providing a pressure control device (1) comprising a first conduit portion (12) fluidly connectable to the first circuit (2) and a second conduit portion (13) fluidly connectable to the second circuit (3),
- connecting said first circuit (2) to said second circuit (3) with said pressure control device (1) arranged in parallel with said first braking actuation device (101) and said second braking actuation device (102) and to said first pressure chamber and said second pressure chamber, by fluidly connecting the first conduit portion (12) to the first circuit (2) and the second conduit portion (13) to the second circuit (3),
- actuating the brake actuating device (103) by compressing a first circuit fluid in the first conduit portion (12) at a first circuit pressure (P1) and a second circuit fluid in the second conduit portion (13) at a second circuit pressure (P2),
- until at least one of the first circuit pressure (P1) and the second circuit pressure (P2) is lower than a threshold pressure (Ps), preventing fluid passages between the first conduit portion (12) and the second conduit portion (13), and so as to sustain the first circuit pressure (P1) or the second circuit pressure (P2) to reach the actuating pressure (Pa), and actuate the first braking actuation device (101) or the second braking actuation device (102) with said actuating pressure (Pa),
- when the first circuit pressure (P1) and the second circuit pressure (P2) are higher than a threshold pressure (Ps), fluidly connecting the first conduit portion (12) and the second conduit portion (13), so as to
align the first circuit pressure (P1) and the second circuit pressure (P2) with an actuating pressure (Pa) and actuate with said actuating pressure (Pa) each braking actuation device (101, 102) with said actuating pressure (Pa).

## Patentansprüche

1. Drucksteuervorrichtung (1) für ein Bremssystem (100), umfassend:
- einen Vorrichtungskörper (4), der mindestens eine erste Schaltungsseitenöffnung (9), mindestens eine zweite Schaltungsseitenöffnung (61) und mindestens eine Leitung (8) teilweise begrenzt, indem die mindestens erste Schaltungsseitenöffnung (9) und die mindestens zweite Schaltungsseitenöffnung (61) in Fluidverbindung gebracht werden, wobei die mindestens eine Leitung (8) mindestens einen ersten Leitungsabschnitt (12) und mindestens einen zweiten Leitungsabschnitt (13) umfasst,
wobei der erste Leitungsabschnitt (12) in Fluidverbindung mit einer ersten Schaltung (2) gebracht werden kann, um eine erste Schaltungsflüssigkeit zu erhalten, wobei die erste Schaltung (2) eine erste Druckkammer einer Bremsbetätigungsvorrichtung (103) umfasst, um die erste Schaltungsflüssigkeit auf einen ersten Schaltungsdruck (P1) unter Druck zu setzen, wobei die erste Druckkammer in Fluidverbindung mit einer ersten Bremsbetätigungsvorrichtung (101) steht, um ein Rad eines Fahrzeugs zu bremsen,
wobei der zweite Leitungsabschnitt (13) in Fluidverbindung mit einer zweiten Schaltung (3) gebracht werden kann, um eine zweite Schaltungsflüssigkeit zu erhalten, wobei die zweite Schaltung (3) eine zweite Druckkammer der Bremsbetätigungsvorrichtung (103) umfasst, um die zweite Schaltungsflüssigkeit auf einen zweiten Schaltungsdruck (P2) unter Druck zu setzen, wobei die zweite Druckkammer in Fluidverbindung mit einer zweiten Bremsbetätigungsvorrichtung (102) steht, um ein Rad eines Fahrzeugs zu bremsen,
- einen Drucksteuermechanismus (5), der dazu konfiguriert ist, den ersten Schaltungsdruck (Pl) und/oder den zweiten Schaltungsdruck (P2) zu steuern, um einen Schwellenwertdruck (Pa) zu erreichen,
wobei der Drucksteuermechanismus (5) mindestens teilweise in der Leitung (8) aufgenommen wird, wobei
- wenn mindestens einer des ersten Schaltungsdrucks (Pl) und des zweiten Schaltungsdrucks (P2) niedriger als ein Schwellenwertdrucks (Ps) ist, der Drucksteuermechanismus (5) dazu konfiguriert ist, Flüssigkeitsdurchgänge zwischen dem ersten Leitungsabschnitt (12) und dem zweiten Leitungsabschnitt (13), oder umgekehrt, zu verhindern, um mindestens einen des ersten Schaltungsdrucks (Pl) und des zweiten Schaltungsdrucks (P2), der höher als der Schwellenwertdruck (P2) ist, bis zu dem Schwellenwertdruck (Pa) zu halten, um entweder die erste Bremsvorrichtung (101) oder die zweite Bremsvorrichtung (102) zu betätigen,
- und wenn der erste Schaltungsdruck (Pl) und der zweite Schaltungsdruck (P2) beide höher als ein Schwellenwertdruck (P2) sind, der Drucksteuermechanismus (5) dazu konfiguriert ist, den ersten Leitungsabschnitt (12) und den zweiten Leitungsabschnitt (13) in Fluidverbindung zu bringen, um den ersten Schaltungsdruck (Pl) und den zweiten Schaltungsdruck (P2) dem Schwellenwertdruck (Pa) anzupassen, um die erste Bremsvorrichtung (101) und die zweite Bremsvorrichtung (102) mit dem Schwellenwertdruck (Pa) zu betätigen.

2. Drucksteuervorrichtung (1) nach dem vorhergehenden Anspruch, wobei
die Leitung (8) einen dritten Leitungsabschnitt (14) umfasst, der angepasst ist, den mindestens einen ersten Leitungsabschnitt (12) und den mindestens einen zweiten Leitungsabschnitt (13) in Fluidverbindung zu bringen,
wobei der Druckregelmechanismus (5) ein erstes Ventil (10) umfasst, das mindestens teilweise in dem ersten Leitungsabschnitt (12) aufgenommen wird, und ein zweites Ventil (11), das mindestens teilweise in dem zweiten Leitungsabschnitt (13) aufgenommen wird,
wobei der dritte Leitungsabschnitt (14) sich zwischen einer ersten Ventilseitenöffnung (18), die in Fluidverbindung mit dem ersten Leitungsabschnitt (12) steht, und einer zweiten Ventilseitenöffnung (20), die in Fluidverbindung mit dem zweiten Leitungsabschnitt steht, erstreckt,
wobei das erste Ventil (10) dazu konfiguriert. ist, die erste Ventilseitenöffnung (18) reversibel zu öffnen und flüssigkeitsdicht zu schließen, wobei, wenn der erste Schaltungsdruck (Pl) niedriger als der Schwellenwertdruck (P2) ist, das erste Ventil (10) die erste Ventilseitenöffnung (18) schließt, indem es Flüssigkeitsdurchgänge von dem ersten Leitungsabschnitt (12) zu dem dritten Leitungsabschnitt (14) und umgekehrt verhindert, und wobei, wenn der erste Schaltungsdruck (Pl) gleich oder höher als der Schwellenwertdruck (P2) ist, das erste Ventil (10) die erste Ventilseitenöffnung (18) öffnet, indem es den ersten Leitungsabschnitt (12) mit dem dritten Leitungsabschnitt (14) in Fluidverbindung bringt, und umgekehrt, und wobei das zweite Ventil (11) dazu konfiguriert ist, die zweite Ventilseitenöffnung (20) reversibel zu öffnen und flüssigkeitsdicht zu schließen, wobei, wenn der zweite Schaltungsdruck (P2) niedriger als der Schwellenwertdruck (P2) ist, das zweite Ventil (11) die zweite Ventilseitenöffnung (20) schließt, indem es Flüssigkeitsdurchgänge von dem zweiten Leitungsabschnitt (12) zu dem dritten Leitungsabschnitt (14) und umgekehrt verhindert, und wobei, wenn der zweite Schaltungsdruck (P2) gleich oder höher als der Schwellenwertdruck (P2) ist, das zweite Ventil (11) die zweite Ventilseitenöffnung (20) öffnet, indem es den zweiten Leitungsabschnitt (12) mit dem dritten Leitungsabschnitt (14) in Fluidverbindung bringt, und umgekehrt,
und/oder wobei der Schwellenwertdruck (P2) zwischen 1 bar und 10 bar liegt, vorzugsweise zwischen 1 bar und 4 bar, noch bevorzugter zwischen 1 bar und 3 bar liegt,
und/oder wobei die Drucksteuervorrichtung (1) einen ersten Verbindungsabschnitt (6) umfasst, um den ersten Leitungsabschnitt (12) in Fluidverbindung mit der ersten Schaltung (2) zu bringen, und einen zweiten Verbindungsabschnitt (7), um den zweiten Leitungsabschnitt (13) in Fluidverbindung mit der zweiten Schaltung (3) zu bringen.

3. Drucksteuervorrichtung (1) nach dem vorhergehenden Anspruch, wobei
- das erste Ventil (10) einen ersten Kolben oder ein erstes Verschlusselement (21) umfasst, das in einem ersten Ventilsitz (15) aufgenommen wird, der durch den Vorrichtungskörper (4) begrenzt wird und mindestens teilweise den ersten Leitungsabschnitt (12) umfasst,
wobei der erste Kolben (21) in Bezug auf den Vorrichtungskörper (4) in dem ersten Ventilsitz (15) reversibel zwischen:
- einer ersten Leitungsverschlusskonfiguration, in der, wenn der erste Schaltungsdruck (Pl) niedriger als der Schwellenwertdruck (P2) ist, der erste Kolben (21) eine Abdichtung mit einer ersten Wand (26) des ersten Ventilsitzes (15) bildet, wodurch ein Flüssigkeitsdurchgang von dem ersten Verbindungsabschnitt (6) zu dem dritten Leitungsabschnitt (14) verhindert wird,
- und mindestens einer ersten Leitungsöffnungskonfiguration, in der, wenn der erste Schaltungsdruck (Pl) mindestens gleich oder höher als der Schwellenwertdruck (P2) ist, der erste Kolben (21) von der ersten Wand (26) entfernt wird bzw. keine Abdichtung mit dieser Wand bildet und einen ersten Flüssigkeitsdurchgang mit dem Vorrichtungskörper (4) begrenzt, der mindestens einen Kopfabschnitt des ersten Kolbens (21) streift und einen Flüssigkeitsdurchgang von dem ersten Verbindungsabschnitt (6) zu dem dritten Leitungsabschnitt (14) ermöglicht, beweglich ist
und/oder wobei
- das zweite Ventil (11) einen zweiten Kolben oder ein zweites Verschlusselement (23) umfasst, das in einem zweiten Ventilsitz (16) aufgenommen wird, der durch den Vorrichtungskörper (4) begrenzt wird und mindestens teilweise den zweiten Leitungsabschnitt (13) umfasst,
wobei der zweite Kolben (23) in Bezug auf den Vorrichtungskörper (4) in dem zweiten Ventilsitz (16) reversibel zwischen:
- einer zweiten Leitungsverschlusskonfiguration, wenn der zweite Schaltungsdruck (P2) niedriger als der Schwellenwertdruck (P2) ist, wobei der zweite Kolben (23) eine Abdichtung mit einer zweiten Wand (28) des zweiten Ventilsitzes (16) bildet, wodurch ein Flüssigkeitsdurchgang von dem zweiten Verbindungsabschnitt (7) zu dem dritten Leitungsabschnitt (14) oder umgekehrt verhindert wird,
- und mindestens einer zweiten Leitungsöffnungskonfiguration, in der, wenn der zweite Schaltungsdruck (P2) mindestens gleich oder höher als der Schwellenwertdruck (P2) ist, der zweite Kolben (23) von der zweiten Wand (28) entfernt wird bzw. keine Abdichtung mit dieser Wand bildet und einen zweiten Flüssigkeitsdurchgang mit dem Vorrichtungskörper (4) begrenzt, der mindestens teilweise einen Kopfabschnitt des zweiten Kolbens (23) streift und einen Flüssigkeitsdurchgang von dem ersten Verbindungsabschnitt (7) zu dem dritten Leitungsabschnitt (14) ermöglicht, beweglich ist,
und/oder wobei das erste Ventil (10) und das zweite Ventil (11) Einwegventile sind,
und/oder wobei
der erste Ventilsitz (15) sich entlang einer Längsrichtung (X-X) des ersten Ventils erstreckt,
der zweite Ventilsitz (16) sich entlang einer Längsrichtung (X'-X') des zweiten Ventils erstreckt,
wobei der dritte Leitungsabschnitt (14) in den ersten Ventilsitz (15) und in den zweiten Ventilsitz (16) nach jeweiligen Eingriffsrichtungen (Y-Y, Y'-Y') in Eingriff steht, die sich schneidend sind und/oder quer zu der Längsrichtung (X-X) des ersten Ventils und zu der Längsrichtung (X'-X') des zweiten Ventils sind,
und/oder wobei die Längsrichtung (X-X) des ersten Ventils und die Längsrichtung (X'-X') des zweiten Ventils parallel und/oder deckungsgleich sind.

4. Drucksteuervorrichtung (1) nach dem vorhergehenden Anspruch, wobei
- das erste Ventil (10) ein erstes elastisches Element (22) umfasst, das in dem ersten Ventilsitz (15) aufgenommen wird,
wobei das erste elastische Element (22) zwischen dem ersten Kolben (21) und dem Vorrichtungskörper (4) angeordnet ist, vorzugsweise einer ersten Bodenwand (25) des ersten Ventilsitzes (15), um den ersten Kolben (21) ständig in die erste Leitungsverschlusskonfiguration zu drücken, wobei das erste elastische Element (22) so bemessen wird, dass, wenn der erste Schaltungsdruck (Pl) niedriger als der Schwellenwertdruck (P2) ist, der erste Kolben sich in der ersten Leitungsverschlusskonfiguration befindet,
- das zweite Ventil (11) ein zweites elastisches Element (24) umfasst, das in dem zweiten Ventilsitz (16) aufgenommen wird,
wobei das zweite elastische Element (24) zwischen dem zweiten Kolben (23) und dem Vorrichtungskörper (4) angeordnet ist, vorzugsweise einer zweiten Bodenwand (26) des zweiten Ventilsitzes (16), um den zweiten Kolben (23) ständig in die zweite Leitungsverschlusskonfiguration zu drücken, wobei das zweite elastische Element (24) so bemessen wird, dass, wenn der zweite Schaltungsdruck (P2) niedriger als der Schwellenwertdruck (P2) ist, der zweite Kolben sich in der zweiten Leitungsverschlusskonfiguration befindet.

5. Drucksteuervorrichtung (1) nach einem der vorhergehenden Ansprüche 3 bis 4,
wobei
der erste Kolben (21) eine erste Dichtung (31) des ersten Kolbens umfasst, wobei die erste Dichtung (31) des ersten Kolbens dazu konfiguriert ist, eine Abdichtung mit einer ersten Gleitwand (32) des ersten Ventilsitzes (15) in jeder Stellung des ersten Kolbens (21) zwischen der mindestens einen ersten Leitungsöffnungskonfiguration und der ersten Leitungsverschlusskonfiguration zu bilden, wodurch das erste elastische Element (22) fluidisch von dem dritten Leitungsabschnitt (14) und/oder der ersten Schaltung (2) isoliert wird;
und/oder wobei
der zweite Kolben (23) eine erste Dichtung (36) des zweiten Kolbens umfasst, wobei die erste Dichtung (36) des zweiten Kolbens dazu konfiguriert ist, eine Abdichtung mit einer zweiten Gleitwand (37) des zweiten Ventilsitzes (16) in jeder Stellung des zweiten Kolbens (23) zwischen der mindestens einen zweiten Leitungsöffnungskonfiguration und der zweiten Leitungsverschlusskonfiguration zu bilden, wodurch das zweite elastische Element (24) fluidisch von dem dritten Leitungsabschnitt (14) und/oder der zweiten Schaltung (3) isoliert wird.

6. Drucksteuervorrichtung (1) nach einem der vorhergehenden Ansprüche 3 bis 5,
wobei
der erste Kolben (21) eine zweite Dichtung (33) des ersten Kolbens umfasst, die dazu konfiguriert ist, eine Abdichtung mit der ersten Wand (26) zu bilden, wenn sich der erste Kolben (21) in der ersten Leitungsverschlusskonfiguration befindet, und wobei die zweite Dichtung (33) des ersten Kolbens von der genannten Wand (26) beabstandet ist, wenn sich der erste Kolben (21) in der ersten Leitungsöffnungskonfiguration befindet, indem er erste Flüssigkeitsdurchgang geöffnet wird,
und/oder wobei
der zweite Kolben (23) eine zweite Dichtung (38) des zweiten Kolbens umfasst, die dazu konfiguriert ist, eine Abdichtung mit der zweiten Wand (28) eine Dichtung zu bilden, wenn sich der zweite Kolben (23) in der zweiten Leitungsverschlusskonfiguration befindet, und wobei die zweite Dichtung (38) des zweiten Kolbens von der zweiten Wand (28) beabstandet ist, wenn sich der zweite Kolben (23) in der zweiten Leitungsöffnungskonfiguration befindet, indem der zweite Flüssigkeitsdurchgang geöffnet wird.

7. Drucksteuervorrichtung (1) nach dem vorhergehenden Anspruch, wobei
die zweite Dichtung (33) des ersten Kolbens eine Dichtung ist, die eingerichtet ist, auf einen Kolbenkörper des ersten Kolbens eingebaut zu werden oder in einen axialen ringförmigen Sitz eingesetzt zu werden, der auf einem Kolbenkopf des ersten Kolbens ausgebildet wird,
oder wobei
der erste Kolben (21) einen ersten Kolbenkopf (34) umfasst, wobei der erste Kolbenkopf (34) eine erste Dichtfläche (35) umfasst, die eingerichtet ist, wenn sie an die erste Wand (26) angrenzt, eine geometrische Abdichtung zu bilden, wenn sich der erste Kolben (26) in der ersten Leitungsverschlusskonfiguration befindet, wobei die zweite Dichtung (33) des ersten Kolbens die erste Dichtfläche (35) ist, wobei die erste Wand (26) und die erste Dichtfläche (35) eine Oberflächenrauheit aufweisen, sodass sie eine hydraulische Abdichtung bilden, wenn sie aneinandergrenzen;
und/oder wobei
die zweite Dichtung (38) des zweiten Kolbens eine Dichtung ist, die eingerichtet ist, auf einen zweiten Kolbenkörper des zweiten Kolbens (38) eingebaut zu werden oder in einen axialen Sitz eingesetzt zu werden, der auf einem zweiten Kolbenkopf (39) ausgebildet wird,
oder wobei
der zweite Kolben (23) einen zweiten Kolbenkopf (39) umfasst, wobei der zweite Kolbenkopf (39) eine zweite Dichtfläche (40) umfasst, die eingerichtet ist, wenn sie axial an die zweite Wand (28) angrenzt, eine geometrische Abdichtung zu bilden, wenn sich der zweite Kolben (23) in der zweiten Leitungsverschlusskonfiguration befindet, und wobei die Dichtfläche (40) von der zweiten Wand (28) beabstandet ist, wenn sich der zweite Kolben (23) in der mindestens zweiten Öffnungskonfiguration befindet, wobei die zweite Dichtung (38) des zweiten Kolbens die zweite Dichtfläche (40) ist, wobei die zweite Wand (28) und die zweite Dichtfläche (40) eine Oberflächenrauheit aufweisen, sodass sie eine hydraulische Abdichtung bilden, wenn sie aneinandergrenzen.

8. Drucksteuervorrichtung (1) nach einem der vorhergehenden Ansprüche 6 bis 7, wobei
die erste Wand (26) einen Abschnitt des ersten Ventilsitzes (15) seitlich begrenzt, vorzugsweise einen ersten Schaltungsseitenabschnitt des ersten Leitungsabschnitts (12),
und/oder
wobei die erste Wand (26) eine Verbindungswand zwischen zwei Segmenten des ersten Leitungsabschnitts (12) ist, die eine erste Abschnittsverengung des ersten Leitungsabschnitts (12) bildet;
und/oder wobei die zweite Wand (28) einen Abschnitt des zweiten Ventilsitzes (15) seitlich begrenzt, vorzugsweise einen zweiten Schaltungsseitenabschnitt des zweiten Leitungsabschnitts (13),
und/oder wobei die zweite Wand (28) eine Verbindungswand zwischen zwei Segmenten des zweiten Leitungsabschnitts (13) ist, die eine zweite Abschnittsverengung des zweiten Leitungsabschnitts (13) bildet;
und/oder wobei der erste Verbindungsabschnitt (6) den ersten Leitungsabschnitt (12) mit der ersten Wand (26) teilweise begrenzt,
der zweite Verbindungsabschnitt (7) den zweiten Leitungsabschnitt (13) mit der zweiten Wand (28) teilweise begrenzt,
wobei die erste Dichtfläche (35) und die erste Wand (26) und die zweite Dichtfläche (40) und die zweite Wand (28) jeweils eine ringförmige geometrische Abdichtung bilden,
wobei
die erste Dichtfläche (35) und die zweite Dichtfläche (40) verjüngte Flächen des jeweiligen ersten Kolbenkopfs (34) und des zweiten Kolbenkopfs (39) sind.
wobei die erste Wand (26) und die zweite Wand (28) verjüngte Flächen sind, die einen Kegelwinkel aufweisen, der größer als der Kegelwinkel der ersten Dichtfläche (35) und der zweiten Dichtfläche (40) in Bezug auf die Längserstreckungsrichtung (X-X, X'-X') des jeweiligen Ventilsitzes ist, vorzugsweise wobei die zweite Dichtfläche (40) und die zweite Wand (28), die erste Dichtfläche (35) und die erste Wand (26) konische Flächen sind, sodass sich der jeweilige Kolbenkopf mit der dazwischenliegenden ringförmigen Dichtung in die erste Wand (26) bzw. zweite Wand (28) einkeilt,
oder wobei die zweite Dichtung (33) des ersten Kolbens und die zweite Dichtung (39) des zweiten Kolbens ringförmige O-Ringe sind, die in einem ringförmigen Sitz des jeweiligen Kolbens (21, 23) aufgenommen werden, wobei der ringförmige Sitz des jeweiligen Kolbens (21, 23) ein axialer ringförmiger Sitz ist.

9. Drucksteuervorrichtung (1) nach einem der vorhergehenden Ansprüche 4 bis 8,
wobei der Druckregelmechanismus (5) eine erste Verstärkung (41) umfasst, in der das erste elastische Element (22) aufgenommen wird, und ein erstes Übertragungselement (42), wobei die erste Verstärkung (41) einen ersten Boden des ersten Ventilsitzes (15) bildet,
wobei das erste elastische Element (22) mit dem ersten Kolben (21) mittels des ersten Übertragungselements (42) verbunden ist,
wobei das erste Übertragungselement (42) eingerichtet ist, einen ersten Kolbeneingriffsabschnitt (43) aufzunehmen, um sich mit dem ersten Kolben (21) durch formschlüssige Verbindung und/oder Übermaß und/oder durch Ineinandergreifen/Eingriff zu verbinden,
wobei das erste Übertragungselement (42) eingerichtet ist, an einem ersten Kolbenschubabschnitt (44) anzugrenzen;
und/oder wobei
der Druckregelmechanismus (5) eine zweite Verstärkung (45) umfasst, in der das zweite elastische Element (24) aufgenommen wird, und ein zweites Übertragungselement (47), wobei die zweite Verstärkung (45) einen zweiten Boden des zweiten Ventilsitzes (16) bildet,
wobei das zweite elastische Element (24) mit dem zweiten Kolben (23) mittels des zweiten Übertragungselements (47) verbunden ist,
wobei das zweite Übertragungselement (46) eingerichtet ist, einen zweiten Kolbeneingriffsabschnitt (47) aufzunehmen, um sich mit dem zweiten Kolben (23) durch formschlüssige Verbindung und/oder durch Übermaß und/oder durch Ineinandergreifen/Eingriff zu verbinden,
wobei das zweite Übertragungselement (46) eingerichtet ist, an einem zweiten Kolbenschubabschnitt (48) anzugrenzen.

10. Drucksteuervorrichtung (1) nach Anspruch 9,
wobei das erste elastische Element (22) und das zweite elastische Element (24) eine erste Feder bzw. eine zweite Feder umfassen, wobei die erste Feder und die zweite Feder eine Drahtfeder sind, wobei die Drahtfeder so bemessen ist, dass sie dem jeweiligen Kolben (21, 23) erlaubt, zurückzuziehen, wenn der jeweilige Druck (Pl, P2), der durch die jeweilige Flüssigkeit auf die Fläche ausgeübt wird, die der ersten Schaltung oder der zweiten Schaltung des Kolbenkopfes zugewandt sind, größer als der Schwellenwertdruck (Ps1) ist,
und/oder wobei das erste Übertragungselement (42) und das zweite Übertragungselement (46) einen ersten T-förmigen Körper bzw. einen zweiten T-förmigen Körper aufweisen, die jeweils einen T-förmigen Abschnitt und eine Durchgangsbohrung aufweisen,
wobei der erste T-förmige Körper einen ersten länglichen Schaft und einen ersten vergrößerten Kopf aufweist,
wobei der erste längliche Schaft innerhalb der Windungen der ersten Feder aufgenommen wird, wobei eine Endwindung der ersten Feder an einer äußeren Kopffläche des ersten vergrößerten Kopfes angrenzt,
wobei der erste längliche Schaft innen einen ersten Eingriffssitz definiert, um mit dem ersten Kolbeneingriffsabschnitt (43) durch Übermaß und/oder durch formschlüssige Verbindung und/oder durch Eingriff in Eingriff zu kommen,
wobei sich der erste Kolbenschubabschnitt (44) an einer inneren Kopffläche des ersten vergrößerten Kopfes angrenzt,
wobei der zweite T-förmige Körper einen zweiten länglichen Schaft und einen zweiten vergrößerten Kopf aufweist,
wobei der zweite längliche Schaft innerhalb der Windungen der zweiten Feder aufgenommen wird, wobei eine Endwindung der zweiten Feder an einer äußeren Kopffläche des zweiten vergrößerten Kopfes angrenzt,
wobei der zweite längliche Schaft innen einen zweiten Eingriffssitz definiert, um mit dem zweiten Kolbeneingriffsabschnitt (47) durch Übermaß und/oder formschlüssige Verbindung und/oder durch Eingriff in Eingriff zu kommen,
wobei sich der zweite Kolbenschubabschnitt (48) an einer inneren Kopffläche des zweiten vergrößerten Kopfes angrenzt,
und/oder wobei die erste Feder und die zweite Feder an der ersten Bodenwand (25) bzw. an der zweiten Bodenwand (27) befestigt sind.

11. Drucksteuervorrichtung (1) nach einem der vorhergehenden Ansprüche 2 bis 10,
wobei der erste Verbindungsabschnitt (6) und der zweite Verbindungsabschnitt (7) einstückig ausgebildet sind und von dem Vorrichtungskörper (4) getrennt sind und mit dem Vorrichtungskörper (4) an der mindestens einen ersten Schaltungsseitenöffnung (9) und der mindestens einen zweiten Schaltungsseitenöffnung (61) dicht verbunden sind, beispielweise durch Zwischenschaltung von Ringdichtungen (62) mit dem Vorrichtungskörper (4), oder wobei
der erste Verbindungsabschnitt (6) und der zweite Verbindungsabschnitt (7) einstückig mit dem Vorrichtungskörper (4) ausgebildet sind und jeweils die mindestens eine erste Schaltungsseitenöffnung (9) und die mindestens eine zweite Schaltungsseitenöffnung (61) begrenzen,
und/oder wobei der Vorrichtungskörper (4) einen ersten Halbkörper (57) und einen zweiten Halbkörper (58) umfasst,
wobei der erste Halbkörper (57) den ersten Leitungsabschnitt (12), eine erste Hälfte des dritten Leitungsabschnitts (14), den ersten Ventilsitz (15) umfasst,
wobei der zweite Halbkörper (58) den zweiten Leitungsabschnitt (13), eine zweite Hälfte des dritten Leitungsabschnitts (14), den zweiten Ventilsitz (16) umfasst,
wobei die erste Hälfte des dritten Leitungsabschnitts (14) mit der zweiten Hälfte des dritten Leitungsabschnitts (14) fluiddicht verbunden ist, beispielweise mittels einer dazwischenliegenden Dichtung (59),
wobei der erste Halbkörper (57) mit dem zweiten Halbkörper (58) durch zumindest ein erstes Paar von Verbindungselementen (60), beispielsweise Schrauben, und/oder ein zweites Paar von Verbindungselementen (60), beispielsweise Schrauben, befestigt wird, die in entsprechenden Verbindungselemente-Sitzen in dem ersten Halbkörper (57) und in dem zweiten Halbkörper (58) aufgenommen werden.

12. Bremssystem (100), umfassend
- mindestens eine erste Schaltung Kreis (2), umfassend mindestens eine erste Druckkammer einer Bremsbetätigungsvorrichtung (103), die in Fluidverbindung mit einer ersten Bremsbetätigungsvorrichtung (101) steht, um ein Rad eines Fahrzeugs zu bremsen,
- mindestens eine zweite Schaltung (3), umfassend mindestens eine zweite Druckkammer der Bremsbetätigungsvorrichtung (103), die in Fluidverbindung mit einer zweiten Bremsbetätigungsvorrichtung (102) steht, um das Rad zu bremsen,
- eine Drucksteuervorrichtung (1) nach einem der vorhergehenden Ansprüche 1 bis 11, die mit der ersten Schaltung (2) und der zweiten Schaltung (3) in parallel zu der ersten Bremsbetätigungsvorrichtung (101) und zu der zweiten Bremsbetätigungsvorrichtung (102) sowie mit der ersten Druckkammer und der zweiten Druckkammer verbunden ist, sodass, bei Betätigung der Bremsbetätigungsvorrichtung (103), jede Bremsbetätigungsvorrichtung (101, 102) mit dem Schwellenwertdruck (Pa) betätigt wird, wenn der erste Schaltungsdruck (Pl) und der zweite Schaltungsdruck (P2) höher als der Schwellenwertdruck (P2) sind,
und eine der ersten Bremsbetätigungsvorrichtung (101) oder der zweiten Bremsbetätigungsvorrichtung (102) mit dem Schwellenwertdruck (Pa) betätigt wird, wenn einer des ersten Schaltungsdrucks (Pl) oder des zweiten Schaltungsdrucks (P2) niedriger als der Schwellenwertdruck (P2) ist.

13. Bremssystem (100) nach dem vorhergehenden Anspruch, wobei die Bremsbetätigungsvorrichtung (103) ein hebelbetätigter Tandem-Masterzylinder ist, oder wobei die Bremsbetätigungsvorrichtung (103) zwei getrennte hebelbetätigte Brems-Masterzylinder umfasst,
und/oder wobei jede Bremsbetätigungsvorrichtung (101, 102) ein Bremssattel ist, der von gegenüberliegenden Seiten mit dem genannten Rad verbunden ist,
und/oder wobei das Rad ein Vorderrad eines Motorrads ist.

14. Verfahren zur Steuerung des Betätigungsdrucks mindestens einer Bremsbetätigungsvorrichtung in einem Bremssystem (100), wobei das Bremssystem (100) umfasst:
- mindestens eine erste Schaltung (2), umfassend mindestens eine erste Druckkammer einer Bremsbetätigungsvorrichtung (103) die in Fluidverbindung mit einer ersten Bremsbetätigungsvorrichtung (101) steht, um ein Fahrzeug zu bremsen,
- mindestens eine zweite Schaltung (3), umfassend mindestens eine zweite Druckkammer der Bremsbetätigungsvorrichtung (103), die in Fluidverbindung mit einer zweiten Bremsbetätigungsvorrichtung (102) steht, um das Fahrzeug zu bremsen,
wobei das Verfahren die folgenden Schritte umfasst:
- Bereitstellen einer Drucksteuervorrichtung (1), die einen ersten Leitungsabschnitt (12) umfasst, der in Fluidverbindung mit der ersten Schaltung (2) gebracht werden kann, und einen zweiten Leitungsabschnitt (13), der in Fluidverbindung mit der zweiten Schaltung (3) gebracht werden kann,
- Verbinden der ersten Schaltung (2) mit der zweiten Schaltung (3) mittels der Drucksteuervorrichtung (1), die parallel zu der ersten Bremsbetätigungsvorrichtung (101) und zu der zweiten Bremsbetätigungsvorrichtung (102) sowie mit der ersten Druckkammer und der zweiten Druckkammer angeordnet ist, indem der erste Schaltungsabschnitt (12) in Fluidverbindung mit der ersten Schaltung (12) gebracht wird und der zweite Schaltungsabschnitt (13) in Fluidverbindung mit der zweite Schaltung (3) in Fluidverbindung gebracht wird,
- Betätigen der Bremsbetätigungsvorrichtung (103), indem eine erste Schaltungsflüssigkeit in dem ersten Schaltungsabschnitt (12) mit einem ersten Schaltungsdruck (Pl) und eine zweite Schaltungsflüssigkeit in dem zweiten Leitungsabschnitt (13) mit einem zweiten Schaltungsdruck (P2) komprimiert wird,
- solange mindestens einer des ersten Schaltungsdrucks (Pl) und des zweiten Schaltungsdruck (P2) niedriger als ein Schwellenwertdruck (P2) ist, Verhindern des Flüssigkeitsdurchgangs zwischen dem ersten Leitungsabschnitt (12) und dem zweiten Leitungsabschnitt (13), und damit Halten des ersten Schaltungsdrucks (Pl) oder des zweiten Schaltungsdrucks (P2), um den Schwellenwertdruck (Pa) zu erreichen, und Betätigen der ersten Bremsbetätigungsvorrichtung (101) oder der zweiten Bremsbetätigungsvorrichtung (102) mit dem Schwellenwertdruck (Pa),
- wenn der erste Schaltungsdruck (Pl) und der zweite Schaltungsdruck (P2) höher als ein Schwellenwertdruck (P2) sind, Bringen in Fluidverbindung des ersten Leitungsabschnitts (12) und des zweiten Leitungsabschnitts (13), um den ersten Schaltungsdruck (Pl) und den zweiten Schaltungsdruck (P2) einem Schwellenwertdruck (Pa) anzupassen und jede Bremsbetätigungsvorrichtung (101, 102) mit dem Schwellenwertdruck (Pa) zu betätigen.

## Revendications

1. Un dispositif de régulation de pression (1) pour un système de freinage (100), comprenant :
- un corps de dispositif (4) délimitant partiellement au moins une ouverture côté premier circuit (9), au moins une ouverture côté second circuit (61), et au moins un conduit (8) mettant en communication fluidique ladite au moins une ouverture côté premier circuit (9) et ladite au moins une ouverture côté second circuit (61), dans lequel ladite au moins un conduit (8) comprend au moins une première portion de conduit (12) et au moins une seconde portion de conduit (13),
dans lequel la première portion de conduit (12) est connectable fluidiquement à un premier circuit (2) pour recevoir un fluide de premier circuit, dans lequel ledit premier circuit (2) comprend une première chambre de pression d'un dispositif d'actionnement de frein (103) pour pressuriser le fluide de premier circuit à une première pression de circuit (P1), dans lequel la première chambre de pression est connectée fluidiquement à un premier dispositif d'actionnement de freinage (101) pour freiner une roue d'un véhicule,
dans lequel la seconde portion de conduit (13) est connectable fluidiquement à un second circuit (3) pour recevoir un fluide de second circuit, dans lequel ledit second circuit (3) comprend une seconde chambre de pression dudit dispositif d'actionnement de frein (103) pour pressuriser le fluide de second circuit à une seconde pression de circuit (P2), dans lequel la seconde chambre de pression est connectée fluidiquement à un second dispositif d'actionnement de freinage (102) pour freiner une roue d'un véhicule,
- un mécanisme de régulation de pression (5) configuré pour réguler la première pression de circuit (P1) et/ou la seconde pression de circuit (P2) pour atteindre une pression d'actionnement (Pa),
dans lequel ledit mécanisme de régulation de pression (5) est logé au moins partiellement dans ledit conduit (8), dans lequel
- lorsqu'au moins une desdites première pression de circuit (P1) et seconde pression de circuit (P2) est inférieure à une pression seuil (Ps), ledit mécanisme de régulation de pression (5) est configuré pour empêcher les passages de fluide entre ladite première portion de conduit (12) et ladite seconde portion de conduit (13), ou inversement, de manière à soutenir au moins l'une desdites première pression de circuit (P1) et seconde pression de circuit (P2) qui est supérieure à ladite pression seuil (P2) jusqu'à ladite pression d'actionnement (Pa) pour actionner soit le premier dispositif de freinage (101) soit le second dispositif de freinage (102)
- et lorsque la première pression de circuit (P1) et la seconde pression de circuit (P2) sont toutes deux supérieures à une pression seuil (Ps), ledit mécanisme de régulation de pression (5) est configuré pour connecter fluidiquement la première portion de conduit (12) et la seconde portion de conduit (13), de manière à aligner ladite première pression de circuit (P1) et ladite seconde pression de circuit (P2) avec ladite pression seuil (Pa) pour actionner le premier dispositif de freinage (101) et le second dispositif de freinage (102) avec ladite pression d'actionnement (Pa).

2. Un dispositif de régulation de pression (1) selon la revendication précédente, dans lequel ledit conduit (8) comprend une troisième portion de conduit (14) adaptée à connecter fluidiquement ladite au moins une première portion de conduit (12) et ladite au moins une seconde portion de conduit (13),
dans lequel ledit mécanisme de réglage de pression (5) comprend une première vanne (10) logée au moins partiellement dans ladite première portion de conduit (12) et une seconde vanne (11) logée au moins partiellement dans ladite seconde portion de conduit (13),
dans lequel ladite troisième portion de conduit (14) s'étend entre une première ouverture côté vanne (18) en communication fluidique avec ladite première portion de conduit (12) et une seconde ouverture côté vanne (20) en communication fluidique avec ladite seconde portion de conduit, dans lequel ladite première vanne (10) est configurée pour ouvrir et fermer étanche ladite première ouverture côté vanne (18) de manière réversible, dans lequel lorsque la première pression de circuit (P1) est inférieure à ladite pression seuil (Ps), ladite première vanne (10) ferme ladite première ouverture côté vanne (18) empêchant les passages de fluide de ladite première portion de conduit (12) vers ladite troisième portion de conduit (14), et inversement, et dans lequel lorsque la première pression de circuit (P1) est soit supérieure soit égale à ladite pression seuil (Ps), ladite première vanne (10) ouvre ladite première ouverture côté vanne (18) en connectant fluidiquement ladite première portion de conduit (12) à ladite troisième portion de conduit (14), et inversement, et dans lequel
ladite seconde vanne (11) est configurée pour ouvrir et fermer étanche ladite seconde ouverture côté vanne (20) de manière réversible, dans lequel lorsque la seconde pression de circuit (P2) est inférieure à ladite pression seuil (Ps), ladite seconde vanne (11) ferme ladite seconde ouverture côté vanne (20) empêchant les passages de fluide de ladite seconde portion de conduit (12) vers ladite troisième portion de conduit (14), et inversement, et dans lequel lorsque la seconde pression de circuit (P2) est soit supérieure soit égale à ladite pression seuil (Ps), ladite seconde vanne (11) ouvre ladite seconde ouverture côté vanne (20) en connectant fluidiquement ladite seconde portion de conduit (12) à ladite troisième portion de conduit (14), et inversement,
et/ou dans lequel ladite pression seuil (Ps) est comprise entre 1 bar et 10 bars, de préférence entre 1 bar et 4 bars, encore plus préférentiellement entre 1 bar et 3 bars,
et/ou dans lequel ledit dispositif de régulation de pression (1) comprend une première partie de connexion (6) pour connecter fluidiquement la première portion de conduit (12) au premier circuit (2), et une seconde partie de connexion (7) pour connecter la seconde portion de conduit (13) au second circuit (3).

3. Un dispositif de régulation de pression (1) selon la revendication précédente, dans lequel
- ladite première vanne (10) comprend un premier piston ou premier élément de volet (21), logé dans un premier siège de vanne (15) délimité par ledit corps de dispositif (4) et comprenant au moins partiellement ladite première portion de conduit (12),
dans lequel ledit premier piston (21) est mobile par rapport audit corps de dispositif (4), dans ledit premier siège de vanne (15), réversiblement entre :
- une première configuration de fermeture de conduit, dans laquelle lorsque la première pression de circuit (P1) est inférieure à la pression seuil (Ps), ledit premier piston (21) forme un joint avec une première paroi (26) dudit premier siège de vanne (15) empêchant un passage de fluide de ladite première partie de connexion (6) vers ladite troisième portion de conduit (14),
- et au moins une première configuration d'ouverture de conduit dans laquelle, lorsque la première pression de circuit (P1) est au moins égale à ou supérieure à ladite pression seuil (Ps), ledit premier piston (21) est éloigné de/évite de former un joint avec ladite première paroi (26) et délimite un premier passage de fluide avec ledit corps de dispositif (4), qui contourne au moins une tête dudit premier piston (21) permettant un passage de fluide de ladite première partie de connexion (6) vers ladite troisième portion de conduit (14),
et/ou dans lequel
- ladite seconde vanne (11) comprend un second piston ou second élément de volet (23) logé dans un second siège de vanne (16) délimité par ledit corps de dispositif (4) et comprenant au moins partiellement ladite seconde portion de conduit (13),
dans lequel ledit second piston (23) est mobile par rapport audit corps de dispositif (4), dans ledit second siège de vanne (16), réversiblement entre :
- une seconde configuration de fermeture de conduit, lorsque ladite seconde pression de circuit (P2) est inférieure à ladite pression seuil (Ps), dans laquelle ledit second piston (23) forme un joint avec une seconde paroi (28) dudit second siège de vanne (16) empêchant un passage de fluide de ladite seconde partie de connexion (7) vers ladite troisième portion de conduit (14), ou inversement,
et au moins une seconde configuration d'ouverture de conduit dans laquelle, lorsque ladite seconde pression de circuit (P2) est au moins égale à ou supérieure à ladite pression seuil (Ps), ledit second piston (23) est éloigné de/évite de former un joint avec ladite seconde paroi (28) et délimite un second passage de fluide avec ledit corps de dispositif (4), qui contourne au moins partiellement une tête dudit second piston (23) permettant un passage de fluide de ladite seconde partie de connexion (7) vers ladite troisième portion de conduit (14),
et/ou dans lequel ladite première vanne (10) et ladite seconde vanne (11) sont des clapets unidirectionnels,
et/ou dans lequel
.ledit premier siège de vanne (15) s'étend le long d'une direction longitudinale (X-X) de ladite première vanne,
ladite seconde assise de vanne (16) s'étend le long d'une direction longitudinale (X'-X') de ladite seconde vanne,
dans lequel ladite troisième portion de conduit (14) s'engage dans ledit premier siège de vanne (15) et ladite seconde assise de vanne (16) selon des directions d'engagement respectives (Y-Y, Y'-Y'), qui sont incidentes et/ou transversales à ladite direction longitudinale (X-X) de ladite première vanne et ladite direction longitudinale (X'-X') de ladite seconde vanne,
et/ou dans lequel ladite direction longitudinale (X-X) de ladite première vanne et ladite direction longitudinale (X'-X') de ladite seconde vanne sont parallèles et/ou coïncidentes.

4. Un dispositif de régulation de pression (1) selon la revendication précédente,
dans lequel
- ladite première vanne (10) comprend un premier élément élastique (22), logé dans ledit premier siège de vanne (15),
dans lequel ledit premier élément élastique (22) est interposé entre ledit premier piston (21) et ledit corps de dispositif (4), de préférence une première paroi inférieure (25) dudit premier siège de vanne (15), de sorte à pousser constamment ledit premier piston (21) vers ladite première configuration de fermeture de conduit, dans lequel ledit premier élément élastique (22) est dimensionné de sorte que lorsque la première pression de circuit (P1) est inférieure à la pression seuil (Ps), ledit premier piston est dans ladite première configuration de fermeture de conduit,
- ladite seconde vanne (11) comprend un second élément élastique (24) logé dans ladite seconde assise de vanne (16),
dans lequel ledit second élément élastique (24) est interposé entre ledit second piston (23) et ledit corps de dispositif (4), de préférence une seconde paroi inférieure (26) dudit second siège de vanne (16), de sorte à pousser constamment ledit second piston (23) vers ladite seconde configuration de fermeture de conduit, dans lequel ledit second élément élastique (24) est dimensionné de sorte que lorsque la seconde pression de circuit (P2) est inférieure à ladite pression seuil (Ps), ledit second piston est dans ladite seconde configuration de fermeture de conduit.

5. Un dispositif d'équilibrage de pression (1) selon l'une quelconque des revendications précédentes 3 à 4, dans lequel
ledit premier piston (21) comprend un premier joint (31) de premier piston, dans lequel ledit premier joint (31) de premier piston est configuré pour former un joint avec une première paroi de glissement (32) dudit premier siège de vanne (15) dans toute position dudit premier piston (21) entre ladite au moins première configuration d'ouverture de conduit et ladite première configuration de fermeture de conduit isolant fluidiquement ledit premier élément élastique (22) de ladite troisième portion de conduit (14) et/ou dudit premier circuit (2) ;
et/ou dans lequel
ledit second piston (23) comprend un premier joint (36) de second piston, dans lequel ledit premier joint (36) de second piston est configuré pour former un joint avec une seconde paroi de glissement (37) dudit second siège de vanne (16) dans toute position dudit second piston (23) entre ladite au moins seconde configuration d'ouverture de conduit et ladite seconde configuration de fermeture de conduit isolant fluidiquement ledit second élément élastique (24) de ladite troisième portion de conduit (14) et/ou dudit second circuit (3).

6. Un dispositif de régulation de pression (1) selon l'une quelconque des revendications précédentes 3 à 5,
dans lequel ledit premier piston (21) comprend un second joint (33) de premier piston configuré pour former un joint avec ladite première paroi (26) lorsque ledit premier piston (21) est dans ladite première configuration de fermeture de conduit, et dans lequel ledit second joint (33) de premier piston est éloigné de ladite première paroi (26) lorsque ledit premier piston (21) est dans ladite première configuration d'ouverture de conduit, ouvrant ledit premier passage de fluide,
et/ou dans lequel
ledit second piston (23) comprend un second joint (38) de second piston configuré pour former un joint avec ladite seconde paroi (28) lorsque ledit second piston (23) est dans ladite seconde configuration de fermeture de conduit, et dans lequel ledit second joint (38) de second piston est éloigné de ladite seconde paroi (28) lorsque ledit second piston (38) est dans ladite seconde configuration d'ouverture de conduit, ouvrant ledit second passage de fluide.

7. Un dispositif de régulation de pression (1) selon la revendication précédente,
dans lequel ledit second joint (33) de premier piston est un joint adapté à être monté sur un corps de premier piston ou à être inséré dans un siège annulaire axial fait sur une tête de premier piston,
ou dans lequel
ledit premier piston (21) comprend une première tête de piston (34), dans lequel ladite première tête de piston (34) comprend une première surface d'étanchéité (35) adaptée à former un joint géométrique en s'appuyant contre ladite première paroi (26), lorsque ledit premier piston (26) est dans ladite première configuration de fermeture de conduit, dans lequel ledit second joint (33) de premier piston est ladite première surface d'étanchéité (35), dans lequel ladite première paroi (26) et ladite première surface d'étanchéité (35) ont une rugosité de surface telle qu'elles forment un joint hydraulique en s'appuyant l'une contre l'autre ;
et/ou dans lequel
ledit second joint (38) de second piston est un joint adapté à être monté sur un corps de second piston dudit second piston (38) ou à être inséré dans un siège axial fait sur une tête de second piston (39),
ou dans lequel
ledit second piston (23) comprend une seconde tête de piston (39), dans lequel ladite seconde tête de piston (39) comprend une seconde surface d'étanchéité (40) adaptée à former un joint géométrique en s'appuyant axialement contre ladite seconde paroi (28), lorsque ledit second piston (23) est dans ladite seconde configuration de fermeture de conduit, et dans lequel ladite surface d'étanchéité (40) est éloignée de ladite seconde paroi (28) lorsque ledit second piston (23) est dans ladite au moins seconde configuration d'ouverture de conduit, dans lequel ledit second joint (38) de second piston est ladite seconde surface d'étanchéité (40), dans lequel ladite seconde paroi (28) et ladite seconde surface d'étanchéité (40) ont une rugosité de surface telle qu'elles forment un joint hydraulique en s'appuyant l'une contre l'autre.

8. Un dispositif de régulation de pression (1) selon l'une quelconque des revendications précédentes 6 à 7, dans lequel
ladite première paroi (26) délimite latéralement une portion dudit premier siège de vanne (15), de préférence une portion côté premier circuit de ladite première portion de conduit (12),
et/ou
dans lequel ladite première paroi (26) est une paroi de connexion entre deux segments de ladite première portion de conduit (12), qui forme une première section rétrécie de ladite première portion de conduit (12);
et/ou dans lequel ladite seconde paroi (28) délimite latéralement une portion dudit second siège de vanne (15), de préférence une portion côté second circuit de ladite seconde portion de conduit (13),
et/ou dans lequel ladite seconde paroi (28) est une paroi de connexion entre deux segments de ladite seconde portion de conduit (13), qui forme une seconde section rétrécie de ladite seconde portion de conduit (13);
et/ou dans lequel ladite première partie de connexion (6) délimite partiellement ladite première portion de conduit (12) avec ladite première paroi (26),
ladite seconde partie de connexion (7) délimite partiellement ladite seconde portion de conduit (13) avec ladite seconde paroi (28),
dans lequel ladite première surface d'étanchéité (35) et ladite première paroi (26), respectivement, et ladite seconde surface d'étanchéité (40) et ladite seconde paroi (28), respectivement, forment un joint géométrique annulaire,
dans lequel
ladite première surface d'étanchéité (35) et ladite seconde surface d'étanchéité (40) sont des surfaces coniques desdites têtes de piston respectives (34) et (39), dans lequel ladite première paroi (26) et ladite seconde paroi (28) sont des surfaces coniques ayant un angle de cône plus grand que l'angle de cône de ladite première surface d'étanchéité (35) et ladite seconde surface d'étanchéité (40) par rapport à la direction d'extension longitudinale (x-x, x'-x') du siège de vanne respectif, de préférence dans lequel ladite seconde surface d'étanchéité (40) et ladite seconde paroi (28), ladite première surface d'étanchéité (35) et ladite première paroi (26) sont des surfaces coniques, telles que ladite tête de piston respective s'encastre dans ladite première paroi (26) ou ladite seconde paroi (28) avec le joint annulaire respectif interposé entre les deux,
ou dans lequel ledit second joint (33) de premier piston et ledit second joint (39) de second piston sont des joints toriques annulaires logés dans un siège annulaire de chaque piston (21, 23), dans lequel ledit siège annulaire de chaque piston (21, 23) est un siège annulaire axial.

9. Un dispositif de régulation de pression (1) selon l'une quelconque des revendications 4 à 8,
dans lequel ledit mécanisme de réglage de pression (5) comprend un premier renfort (41) dans lequel ladite premier élément élastique (22) est logé et un premier élément de transmission (42), dans lequel ledit premier renfort (41) forme un premier fond du premier siège de vanne (15),
dans lequel ledit premier élément élastique (22) est connecté audit premier piston (21) au moyen dudit premier élément de transmission (42),
dans lequel ledit premier élément de transmission (42) est adapté à recevoir une première partie d'engagement de piston (43) pour se connecter audit premier piston (21) par couplage positif et/ou par interférence et/ou par encliquetage/engagement,
dans lequel ladite premier élément de transmission (42) est adapté à s'appuyer contre une première partie de poussée de piston (44); et/ou dans lequel
ledit mécanisme de réglage de pression (5) comprend un second renfort (45) dans lequel ledit second élément élastique (24) est logé et un second élément de transmission (47), dans lequel ladite second renfort (45) forme un second fond du second siège de vanne (16), dans lequel ledit second élément élastique (24) est connecté audit second piston (23) au moyen dudit second élément de transmission (47),
dans lequel ledit second élément de transmission (46) est adapté à recevoir une seconde partie d'engagement de piston (47) pour se connecter audit second piston (23) par couplage positif et/ou par interférence et/ou par engagement,
dans lequel ledit second élément de transmission (46) est adapté à s'appuyer contre une seconde partie de poussée de piston (48).

10. Un dispositif de régulation de pression (1) selon la revendication 9,
dans lequel ladite premier élément élastique (22) et ledit second élément élastique (24) comprennent respectivement un premier ressort et un second ressort, dans lequel ledit premier ressort et ledit second ressort sont des ressorts à fil, dans lequel ledit ressort à fil est dimensionné de manière à permettre audit piston respectif (21, 23) de se rétracter lorsque la pression respective (Pl, P2) appliquée par le fluide respectif sur la surface faisant face au premier circuit ou au second circuit de la tête de piston est supérieure à ladite pression seuil (Ps1),
et/ou dans lequel ledit premier élément de transmission (42) et ledit second élément de transmission (46) ont respectivement un premier corps en T et un second corps en T, ayant une section en T et un trou axial traversant,
dans lequel ledit premier corps en T a une première tige allongée et une première tête élargie,
dans lequel ladite première tige allongée est logée à l'intérieur des tours dudit premier ressort, dans lequel une spire terminale dudit premier ressort s'appuie contre une surface extérieure de ladite première tête élargie, dans lequel ladite première tige allongée définit en interne un premier siège d'engagement pour engager ladite première partie d'engagement de piston (43) par interférence et/ou par couplage positif et/ou par engagement, dans lequel ladite première partie de poussée de piston (44) s'appuie contre une surface interne de ladite première tête élargie,
dans lequel ledit second corps en T a une seconde tige allongée et une seconde tête élargie,
dans lequel ladite seconde tige allongée est logée à l'intérieur des tours dudit second ressort, dans lequel une spire terminale dudit second ressort s'appuie contre une surface extérieure de ladite seconde tête élargie,
dans lequel ladite seconde tige allongée définit en interne un second siège d'engagement pour engager ladite seconde partie d'engagement de piston (47) par interférence et/ou par couplage positif et/ou par engagement, dans lequel ladite seconde partie de poussée de piston (48) s'appuie contre une surface interne de ladite seconde tête élargie,
et/ou dans lequel ledit premier ressort et ledit second ressort sont fixés respectivement à la première paroi inférieure (25) et à la seconde paroi inférieure (27).

11. Un dispositif d'équilibrage de pression (1) selon l'une quelconque des revendications 2 à 10,
dans lequel ladite première partie de connexion (6) et ladite seconde partie de connexion (7) sont réalisées en une seule pièce séparée dudit corps de dispositif (4) et sont connectées de manière étanche audit corps de dispositif (4) auxdites au moins une ouverture côté premier circuit (9) et au moins une ouverture côté second circuit (61), par exemple par l'interposition de joints annulaires (62) avec ledit corps de dispositif (4), ou dans lequel
ladite première partie de connexion (6) et ladite seconde partie de connexion (7) sont réalisées en une seule pièce avec ledit corps de dispositif (4) et délimitent respectivement ladite au moins une ouverture côté premier circuit (9) et ladite au moins une ouverture côté second circuit (61),
et/ou dans lequel ledit corps de dispositif (4) comprend une première demi-coque (57) et une seconde demi-coque (58),
dans lequel la première demi-coque (57) comprend ladite première portion de conduit (12), une première moitié dudit troisième conduit (14), ledit premier siège de vanne (15),
dans lequel la seconde demi-coque (58) comprend ladite seconde portion de conduit (13), une seconde moitié dudit troisième conduit (14), ladite seconde assise de vanne (16),
dans lequel ladite première moitié dudit troisième conduit (14) est connectée de manière étanche à ladite seconde moitié dudit troisième conduit (14), par exemple par l'intermédiaire d'un joint interposé (59),
dans lequel la première demi-coque (57) est contraint à la seconde demi-coque (58) par au moins une première paire d'éléments de connexion (60), par exemple de type vis, et/ou une seconde paire d'éléments de connexion (60), par exemple de type vis, logés dans des sièges d'éléments de connexion respectifs réalisés dans la première demi-coque (57) et la seconde demi-coque (58).

12. Un système de freinage (100) comprenant
- au moins un premier circuit (2) comprenant au moins une première chambre de pression d'un dispositif d'actionnement de frein (103) connectée fluidiquement à un premier dispositif d'actionnement de freinage (101) pour freiner une roue d'un véhicule,
- au moins un second circuit (3) comprenant au moins une seconde chambre de pression dudit dispositif d'actionnement de frein (103) connectée fluidiquement à un second dispositif d'actionnement de freinage (102) pour freiner ladite roue,
- un dispositif de régulation de pression (1) selon l'une quelconque des revendications précédentes 1 à 11, connecté audit premier circuit (2) et audit second circuit (3) en parallèle avec ledit premier dispositif d'actionnement de freinage (101) et ledit second dispositif d'actionnement de freinage (102) et auxdites première et seconde chambres de pression de sorte que, en actionnant ledit dispositif d'actionnement de frein (103), chaque dispositif d'actionnement de freinage (101, 102) est actionné avec ladite pression d'actionnement (Pa), lorsque la première pression de circuit (P1) et la seconde pression de circuit (P2) sont supérieures à ladite pression seuil (Ps),
et l'un desdits premier dispositif d'actionnement de freinage (101) et second dispositif d'actionnement de freinage (102) est actionné avec ladite pression d'actionnement (Pa) lorsqu'une desdites première pression de circuit (P1) et seconde pression de circuit (P2) est inférieure à ladite pression seuil (Ps).

13. Un système de freinage (100) selon la revendication précédente, dans lequel ledit dispositif d'actionnement de frein (103) est un maître-cylindre tandem actionné par levier, ou dans lequel ledit dispositif d'actionnement de frein (103) comprend deux maîtres-cylindres de frein actionnés par levier séparés,
et/ou dans lequel chacun des dispositifs d'actionnement de freinage (101, 102) est un étrier de frein connecté de côtés opposés à ladite roue,
et/ou dans lequel ladite roue est une roue avant d'une motocyclette.

14. Un procédé de commande de la pression d'actionnement d'au moins un dispositif d'actionnement de freinage dans un système de freinage (100), dans lequel ledit système de freinage (100) comprend
- au moins un premier circuit (2) comprenant au moins une première chambre de pression d'un dispositif d'actionnement de frein (103) connectée fluidiquement à un premier dispositif d'actionnement de freinage (101) pour freiner un véhicule,
au moins un second circuit (3) comprenant au moins une seconde chambre de pression dudit dispositif d'actionnement de frein (103) connectée fluidiquement à un second dispositif d'actionnement de freinage (102) pour freiner ledit véhicule,
dans lequel ledit procédé comprend les étapes de :
- fournir un dispositif de régulation de pression (1) comprenant une première portion de conduit (12) connectable fluidiquement au premier circuit (2) et une seconde portion de conduit (13) connectable fluidiquement au second circuit (3),
- connecter ledit premier circuit (2) au second circuit (3) avec ledit dispositif de régulation de pression (1) disposé en parallèle avec ledit premier dispositif d'actionnement de freinage (101) et ledit second dispositif d'actionnement de freinage (102) et auxdites première et seconde chambres de pression, en connectant fluidiquement la première portion de conduit (12) au premier circuit (2) et la seconde portion de conduit (13) au second circuit (3),
- actionner le dispositif d'actionnement de frein (103) en comprimant un fluide de premier circuit dans la première portion de conduit (12) à une première pression de circuit (P1) et un fluide de second circuit dans la seconde portion de conduit (13) à une seconde pression de circuit (P2),
- jusqu'à ce qu'au moins une desdites première pression de circuit (P1) et seconde pression de circuit (P2) soit inférieure à une pression seuil (Ps), empêcher les passages de fluide entre la première portion de conduit (12) et la seconde portion de conduit (13), et de manière à soutenir la première pression de circuit (P1) ou la seconde pression de circuit (P2) pour atteindre ladite pression d'actionnement (Pa), et actionner le premier dispositif d'actionnement de freinage (101) ou le second dispositif d'actionnement de freinage (102) avec ladite pression d'actionnement (Pa),
- lorsque la première pression de circuit (P1) et la seconde pression de circuit (P2) sont supérieures à une pression seuil (Ps), connecter fluidiquement la première portion de conduit (12) et la seconde portion de conduit (13), de manière à
aligner la première pression de circuit (P1) et la seconde pression de circuit (P2) avec une pression d'actionnement (Pa) et actionner avec ladite pression d'actionnement (Pa) chaque dispositif d'actionnement de freinage (101, 102) avec ladite pression d'actionnement (Pa).
